# EUROPEAN PATENT APPLICATION

(11) **EP 4 813 773 A1**
(43) Date of publication of application: **30.09.2026**
(21) Application number: 26168237.1
(22) Date of filing: 26.03.2026
(51) Int. Cl.: B60W 10/12, B60W 10/04, B60W 10/10, B60W 10/18, B60W 10/20, B60W 10/22, B60W 30/02, B60W 30/18, B60W 30/182, B60W 40/064, B60W 40/068, B60W 50/08, B60W 50/00

(54) **CONTROL SYSTEM AND METHOD FOR CONTROLLING A VEHICLE**

(30) Priority: 26.03.2025 GB 202504422
(71) Applicant: Jaguar Land Rover Limited, Coventry, Warwickshire CV3 4LF (GB)
(72) Inventor: Frampton, Thomas, Coventry, CV3 4LF (GB); Walker, Stuart, Coventry, CV3 4LF (GB); Harrison, Edward, Coventry, CV3 4LF (GB)
(74) Representative: Jaguar Land Rover Patents Department

(57) **Abstract**

Aspects of the present invention relate to a control system (1) for controlling at least one vehicle subsystem 3(n) to control dynamic operation of a vehicle (5). The control system (1) is configured to select one of a plurality of subsystem control modes (170(n)) in dependence on a determined terrain type on which the vehicle (5) is operating. The plurality of subsystem control modes (170(n)) each define one or more configurable control parameter (CCP(n)) for controlling operation of the at least one vehicle subsystem 3(n). The control system (1) includes one or more processor (35) collectively configured to receive at least one input signal comprising at least one terrain indicator parameter (165(n)) providing an indication of the terrain type on which the vehicle (5) is operating; and to determine the terrain type on which the vehicle (5) is operating in dependence on the at least one terrain indicator parameter (165(n)). One of the plurality of subsystem control modes (170(n)) is selected in dependence on the determined terrain type, the selected one of the plurality of subsystem control modes (170(n)) defining the one or more control parameter for the at least one vehicle subsystem 3(n) for operation on the determined terrain type. The one or more processor (35) is collectively configured to configure the one or more configurable control parameter (CCP(n)) in the selected one of the plurality of subsystem control modes (170(n)) in dependence on the at least one terrain indicator parameter (165(n)). Aspects of the present invention also relate to a vehicle (5) and a method (400) of controlling a vehicle (5).

## Description

### TECHNICAL FIELD

The present disclosure relates to a control system and method for controlling a vehicle. More particularly, but not exclusively, the control system and method are suitable for a control system for controlling at least one vehicle subsystem to control dynamic operation of a vehicle. Aspects of the present invention also relate to a vehicle.

### BACKGROUND

It is known to provide a control system for controlling operation of one or more vehicle subsystems provided on a vehicle. A plurality of subsystem control modes may be defined for controlling operation of the vehicle subsystems. The subsystem control modes may be associated with particular operating conditions or terrain types. The control system is configured to s subsystem control modes in dependence on the prevailing conditions. The subsystem control modes could be defined for a wide range of operating conditions, for example to account for variations in the terrain type. However, continuous changes to the subsystem control mode may prove disconcerting for a user. Moreover, manual operation of the system may be overly complicated.

It is an aim of the present invention to address one or more of the disadvantages associated with the prior art.

### SUMMARY OF THE INVENTION

Aspects and embodiments of the invention provide a control system, a vehicle and a method as claimed in the appended claims.

According to an aspect of the present invention there is provided a control system for controlling at least one vehicle subsystem to control dynamic operation of a vehicle, the control system being configured to select one of a plurality of subsystem control modes in dependence on a determined terrain type on which the vehicle is operating, each of the plurality of subsystem control modes defining one or more configurable control parameter for controlling operation of the at least one vehicle subsystem; the control system comprising one or more processor collectively configured to:
receive at least one input signal comprising at least one terrain indicator parameter providing an indication of the terrain type on which the vehicle is operating;
determine the terrain type on which the vehicle is operating in dependence on the at least one terrain indicator parameter; and
select one of the plurality of subsystem control modes in dependence on the determined terrain type, the selected one of the plurality of subsystem control modes defining the one or more control parameter for the at least one vehicle subsystem for operation on the determined terrain type;
wherein the one or more processor is collectively configured to configure the one or more configurable control parameter in the selected one of the plurality of subsystem control modes in dependence on the at least one terrain indicator parameter.

The control system is configured to select one of the plurality of subsystem control modes. The subsystem control modes each define one or more configurable control parameter which are configured in dependence on the at least one terrain indicator parameter. The one or more configurable control parameter may be modified to adjust the subsystem control mode. The one or more configurable control parameter may be adjusted without changing the selected subsystem control mode. In other words, the one or more configurable control parameter can be customised within the selected subsystem control mode. The one or more processor may monitor the at least one terrain indicator parameter and adjust the one or more configurable control parameter in dependence on changes in the at least one terrain indicator parameter. The one or more processor may be configured to output a control signal to configure the one or more configurable control parameter.

The selected one of the plurality of subsystem control modes can remain unchanged while configuring the one or configurable control parameter in dependence on the at least one terrain indicator parameter. Configuring the one or configurable control parameter may comprise modifying or varying the one or configurable control parameter in dependence on the terrain indicator parameter. The one or more configurable control parameter may be adjusted dynamically within the selected one of the plurality of subsystem control modes. Each subsystem control mode may define one or more limit for the or each configurable control parameter. The one or configurable control parameter may be modified within the one or more limit defined for the selected one of the plurality of subsystem control modes.

The control system comprises one or more controllers collectively comprising at least one electronic processor having an electrical input for receiving an input signal; and at least one memory device electrically coupled to the at least one electronic processor and having instructions stored therein; and wherein the at least one electronic processor is configured to access the at least one memory device and execute the instructions thereon so as to control at least one vehicle subsystem to control dynamic operation of a vehicle. The at least one electronic processor may be configured to receive at least one input signal comprising at least one terrain indicator parameter providing an indication of the terrain type on which the vehicle is operating. The at least one electronic processor may be configured to select one of the plurality of subsystem control modes in dependence on the determined terrain type, the selected one of the plurality of subsystem control modes defining the one or more control parameter for the at least one vehicle subsystem for operation on the determined terrain type. Furthermore, the at least one electronic processor may be configured to configure the one or more configurable control parameter in the selected one of the plurality of subsystem control modes in dependence on the at least one terrain indicator parameter. The at least one electronic processor may be configured to output a control signal to configure the one or more configurable control parameter.

The subsystem control modes may comprise one or more of the following: a general driving control mode; a Grass/Gravel/Snow (GGS) control mode; a mud and ruts control mode; sand control mode; and rock crawl control mode. Other subsystem control modes may be defined. For example, a dedicated snow control mode may be defined.

The at least one input signal comprises at least one terrain indicator parameter which provides an indication of the terrain type on which the vehicle is operating. The at least one terrain indicator parameter may provide a direct or indirect indication of the terrain type. The at least one terrain indicator parameter may, for example, comprise or consist of one or more of the following: a rolling resistance of the vehicle; a surface friction or coefficient of friction (µ); a surface roughness; and a gradient of the surface on which the vehicle is operating The at least one terrain indicator parameter may be measured directly by one or more sensor provided onboard the vehicle. For example, the at least one terrain indicator parameter may correspond to a dynamic operating parameter of the vehicle. Alternatively, or in addition, the at least one terrain indicator parameter may be determined in dependence on a signal (or signals) received from one or more sensor provided onboard the vehicle.

The one or more sensor may comprise one or more of the following: one or more wheel speed sensor for measuring the speed of each of the wheels; a body pitch sensor; a yaw sensor; a longitudinal acceleration sensor; a torque sensor; a gradient sensor; a brake pedal position sensor; an acceleration pedal position sensor; one or more motion sensors or accelerometer; and one or more tire pressure monitoring sensors.

The at least one terrain indicator parameter may comprise at least one variable representing a characteristic of the terrain type on which the vehicle is operating. The one or more processor may be configured collectively to compare the variable to a predefined threshold and to modify the one or more configurable control parameter in dependence on a determination that the variable is greater than or less than the predefined threshold.

The at least one variable may comprise a rolling resistance estimate. The predefined threshold may be a rolling resistance threshold. The one or more configurable control parameter may be modified in dependence on a determination that the rolling resistance estimate is greater than or less than the predefined rolling resistance threshold. The rolling resistance estimate may, for example, be used to differentiate between shallow snow and deep snow. The one or more processor may determine that the terrain type comprises or consists of a deep snow terrain in dependence on a determination that the rolling resistance estimate is greater than a rolling resistance threshold. Conversely, the one or more processor may determine that the terrain type comprises or consists of a shallow snow terrain in dependence on a determination that the rolling resistance estimate is less than a rolling resistance threshold. The one or more configurable control parameter may be modified in dependence on a determination that the terrain type comprises or consists of shallow snow terrain or deep snow terrain. This differentiation may be made without changing to a different subsystem control mode. For example, the configurable control parameter may be modified while a snow control mode or a grass gravel snow control mode is selected.

The at least one variable may comprise a surface friction estimate. The predefined threshold may be a surface friction threshold. The one or more configurable control parameter being modified in dependence on a determination that the surface friction estimate is greater than or less than the predefined surface friction threshold. The surface friction estimate may, for example, be used to differentiate between gravel and wet grass. The one or more processor may determine that the terrain type comprises or consists of a gravel terrain in dependence on a determination that the surface friction estimate is greater than a rolling resistance threshold. Conversely, the one or more processor may determine that the terrain type comprises or consists of a wet grass terrain in dependence on a determination that the surface friction estimate is less than a rolling resistance threshold.

The at least one variable may comprise a surface roughness estimate. The predefined threshold may comprise a surface roughness threshold. The one or more configurable control parameter may be modified in dependence on a determination that the surface roughness estimate is greater than or less than the predefined surface roughness threshold. The surface roughness threshold may, for example, be used to differentiate between gravel and a road (metalled surface). The one or more processor may determine that the terrain type comprises or consists of a gravel terrain in dependence on a determination that the surface friction estimate is greater than the surface roughness threshold. Conversely, the one or more processor may determine that the terrain type comprises or consists of a road in dependence on a determination that the surface roughness estimate is less than the rolling resistance threshold.

The terrain type on which the vehicle is operating may be determined in dependence on one or more atmospheric indicator parameter. The one or more atmospheric indicator parameter provides an indication of the prevailing atmospheric conditions. The atmospheric conditions may provide an indirect indication of the terrain. The one or more atmospheric indicator parameter may be used in addition to the one or more terrain indicator parameter to determine the terrain type. The one or more atmospheric indicator parameter may comprise one or more of the following: ambient temperature, a measured precipitation (such as rainfall) and a relative humidity. The one or more atmospheric indicator parameter may be estimated or measured. For example, the one or more atmospheric indicator parameter may be measured by a sensor provided onboard the vehicle. Alternatively, or in addition, the one or more atmospheric indicator parameter may be estimated, for example in dependence on a weather forecast for the geolocation of the vehicle. It will be understood that the terrain type may be determined without the one or more atmospheric indicator parameter. In other words, the terrain type may be determined in dependence on the one or more terrain indicator parameter excluding the one or more atmospheric indicator parameter.

At least one of the plurality of subsystem control modes may comprise a plurality of subsidiary subsystem control modes. Each of the plurality of subsidiary subsystem control modes may define one or more modified control parameter for controlling operation of the at least one vehicle subsystem. The one or more configurable control parameter may be configured by selecting one of the plurality of subsidiary subsystem control modes. The one or more configurable control parameter may be configured by selecting a different one of the plurality of subsidiary subsystem control modes. The subsidiary subsystem control modes may comprise one or more of the following: a grass subsidiary control mode; a gravel subsidiary control mode; and a subsidiary control mode; a firm sand subsidiary control mode; and a soft sand subsidiary control mode.

The plurality of subsystem control modes may comprise a grass, gravel, snow (GGS) control mode. The grass, gravel snow (GGS) control mode may comprise a plurality of subsidiary subsystem control modes. The subsidiary subsystem control modes may comprise a grass subsidiary subsystem control mode for operation on a terrain type comprising or consisting of grass. The subsidiary subsystem control modes may comprise a deep snow subsidiary subsystem control mode for operation on a terrain type comprising or consisting of deep snow. The subsidiary subsystem control modes may comprise a shallow snow subsidiary subsystem control mode for operation on a terrain type comprising or consisting of shallow snow. At least in certain embodiments, the control system may be configured to select one of the subsidiary subsystem control modes, for example to select one of the deep snow and shallow snow subsidiary subsystem control modes. The subsidiary subsystem control mode may be selected within the selected subsystem control mode, i.e. without changing the selected subsystem control mode.

The plurality of subsystem control modes may comprise a sand control mode. The sand control mode may comprise a plurality of subsidiary subsystem control modes. The subsidiary subsystem control modes may comprise a firm sand subsidiary subsystem control mode for operation on a terrain type comprising or consisting of firm sand. The subsidiary subsystem control modes may comprise a soft sand subsidiary subsystem control mode for operation on a terrain type comprising or consisting of soft sand. At least in certain embodiments, the control system may be configured to select one of the subsidiary subsystem control modes, for example to select one of the firm sand and soft sand subsidiary subsystem control modes. The subsidiary subsystem control mode may be selected within the selected subsystem control mode, i.e. without changing the selected subsystem control mode.

The one or more processor may be collectively configured to determine a plurality of subsidiary subsystem control mode probabilities in dependence on the at least one terrain indicator parameter, the subsidiary subsystem control mode probabilities providing an indication of a suitability of each of the subsidiary subsystem control modes. One of the plurality of subsidiary subsystem control modes may be selected in dependence on a determination that the subsidiary subsystem control mode probability for that subsidiary subsystem control mode is greater than a subsidiary subsystem control mode probability threshold. At least in certain embodiments, the subsidiary subsystem control mode is selected in dependence on the plurality of subsidiary subsystem control mode probabilities. The one or more processor may be configured to output a selection signal to indicate a selected one of the plurality of subsidiary subsystem control modes. The one or more processor may be collectively configured to output a subsidiary subsystem control mode selection signal indicating a selected one of the plurality of subsidiary subsystem control modes.

The one or more processor may be collectively configured to determine a subsystem control mode probability for each of the plurality of terrain indicator parameters in dependence on the at least one terrain indicator parameter. The subsystem control mode probabilities may provide an indication of a suitability of each of the subsystem control modes. The one or more processor may be collectively configured to select one of the plurality of subsystem control modes in dependence on a determination that the subsystem control mode probability is greater than a subsystem control mode probability threshold. A subsystem control mode probability may be determined for each of the plurality of subsystem control modes. The subsystem control mode probabilities may provide an indication of a suitability of the respective subsystem control modes. The subsystem control mode probabilities may each be determined in dependence on the at least one terrain indicator parameter.

One of the plurality of subsystem control modes may be selected in dependence on a determination that the subsystem control mode probability for that subsystem control mode is greater than a subsystem control mode probability threshold. At least in certain embodiments, the subsystem control mode is selected in dependence on the plurality of subsystem control mode probabilities. The one or more processor may be collectively configured to output a subsystem control mode selection signal indicating a selected one of the plurality of subsystem control mode.

At least in certain embodiments the subsystem control mode probability threshold may be greater than the subsidiary subsystem control mode probability threshold. Thus, one of the plurality of subsidiary subsystem control modes may be selected with a lower probability than required to select one of the plurality of subsystem control modes.

The one or more configurable control parameter may comprise one or more torque curve for controlling operation of a propulsion system. Alternatively, or in addition, the one or more configurable control parameter may comprise or more gear shift map for controlling selection of a drive ratio of a transmission system. Alternatively, or in addition, the one or more configurable control parameter may comprise one or more front wheel steering map for controlling a front wheel steering system. Alternatively, or in addition, the one or more configurable control parameter may comprise one or more braking map for controlling a brake system. Alternatively, or in addition, the one or more configurable control parameter may comprise one or more suspension height setting for controlling a suspension system. Alternatively, or in addition, the one or more configurable control parameter may comprise one or more differential configuration for controlling a differential system. Alternatively, or in addition, the one or more configurable control parameter may comprise one or more wheel slip threshold for controlling a traction control system. Alternatively, or in addition, the one or more configurable control parameter may comprise one or more damper setting for controlling a ride system. Alternatively, or in addition, the one or more configurable control parameter may comprise one or more rear wheel steering map for controlling a rear wheel steering system.

According to a further aspect of the present invention there is provided a vehicle comprising a control system as described herein.

According to a further aspect of the present invention there is provided a method of controlling at least one vehicle subsystem to control dynamic operation of a vehicle, the method comprising:
determining a terrain type on which the vehicle is operating in dependence on at least one terrain indicator parameter;
selecting one of a plurality of subsystem control modes in dependence on a determined terrain type on which the vehicle is operating, the selected one of the plurality of subsystem control modes defining the one or more control parameter for the at least one vehicle subsystem for operation on the determined terrain type;
wherein each of the plurality of subsystem control modes define one or more configurable control parameter for controlling operation of the at least one vehicle subsystem; the method comprising configuring the one or more configurable control parameter in the selected one of the plurality of subsystem control modes in dependence on the at least one terrain indicator parameter.

According to a further aspect of the present invention there is provided computer readable instructions which, when executed by one or more processors, cause the one or more processors to perform the method(s) described herein.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### BRIEF DESCRIPTION OF THE DRAWINGS

One or more embodiments of the invention will now be described, by way of example only, with reference to the accompanying drawings, in which:
Figure 1 shows a schematic representation of a vehicle comprising a control system in accordance with an embodiment of the present invention;
Figure 2 shows a plan view of the vehicle shown in Figure 1;
Figure 3 shows a schematic representation of a control system for controlling at least one vehicle subsystem in accordance with an embodiment of the present invention;
Figure 4A is a schematic representation of a propulsion system of the vehicle which is configurable in dependence on a terrain indicator parameter;
Figure 4B is a schematic representation of a transmission system of the vehicle which is configurable in dependence on a terrain indicator parameter;
Figure 4C is a schematic representation of a steering system of the vehicle which is configurable in dependence on a terrain indicator parameter;
Figure 4D is a schematic representation of a brake system of the vehicle which is configurable in dependence on a terrain indicator parameter;
Figure 4E is a schematic representation of a suspension system of the vehicle which is configurable in dependence on a terrain indicator parameter;
Figure 4F is a schematic representation of a differential system of the vehicle which is configurable in dependence on a terrain indicator parameter;
Figure 4G is a schematic representation of a traction control system of the vehicle which is configurable in dependence on a terrain indicator parameter;
Figure 4H is a schematic representation of a damper control system of the vehicle which is configurable in dependence on a terrain indicator parameter;
Figure 4I is a schematic representation of a rear wheel steering system of the vehicle which is configurable in dependence on a terrain indicator parameter;
Figure 5 shows a first block diagram of a method of controlling at least one vehicle subsystem within a grass gravel snow (GGS) control mode in accordance with an embodiment of the present invention;
Figure 6 shows a first second block diagram of a method of controlling at least one vehicle subsystem within a Sand control mode in accordance with an embodiment of the present invention; and

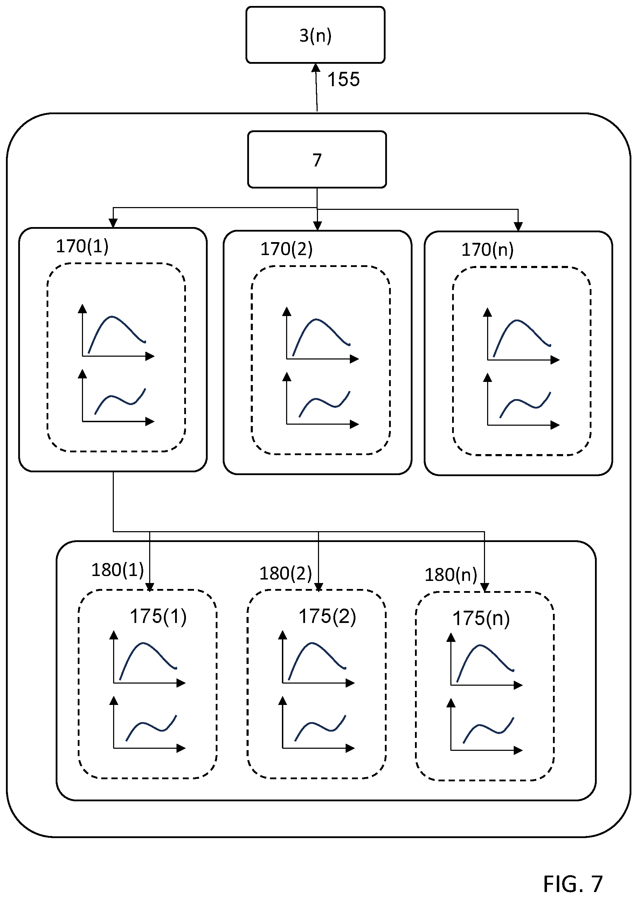

Figure 7 is a schematic representation of a control unit configured to select one of a plurality of subsidiary subsystem control modes in dependence on a subsidiary mode selection probability.

### DETAILED DESCRIPTION

A control system 1 and a method 400 for controlling operation of at least one vehicle subsystem 3(n) of a vehicle 5 in accordance with an embodiment of the present invention is described herein with reference to the accompanying Figures. As described herein, the control system 1 comprises a vehicle control unit 7 for controlling operation of the at least one vehicle subsystem 3(n).

The vehicle 5 is described herein with reference to a reference frame comprising a longitudinal axis X, a transverse axis Y and a vertical axis Z. The reference signs herein include a suffix in the form of a whole number to differentiate between a plurality of like components on the vehicle 5. The same suffix is applied for components associated with each other, for example components forming part of the same sub-assembly of the vehicle 5. The integer n is used herein to identify a signal or event relating to a corresponding one of a plurality of features of the vehicle 5.

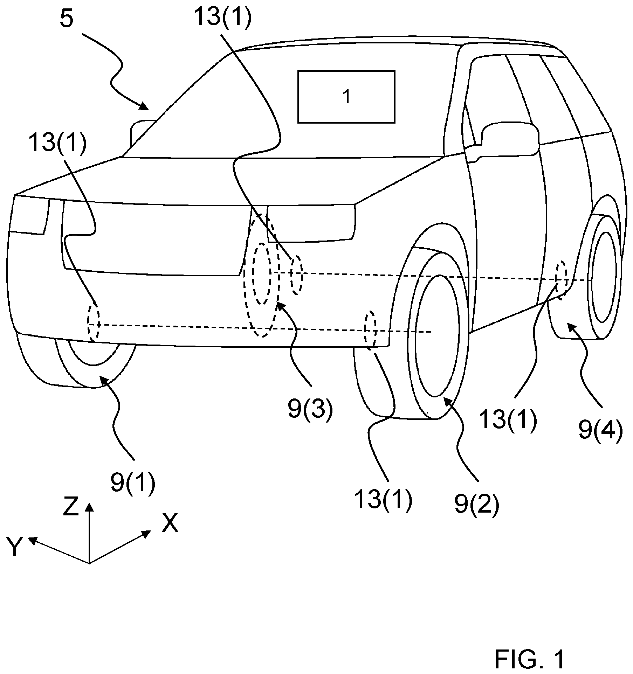

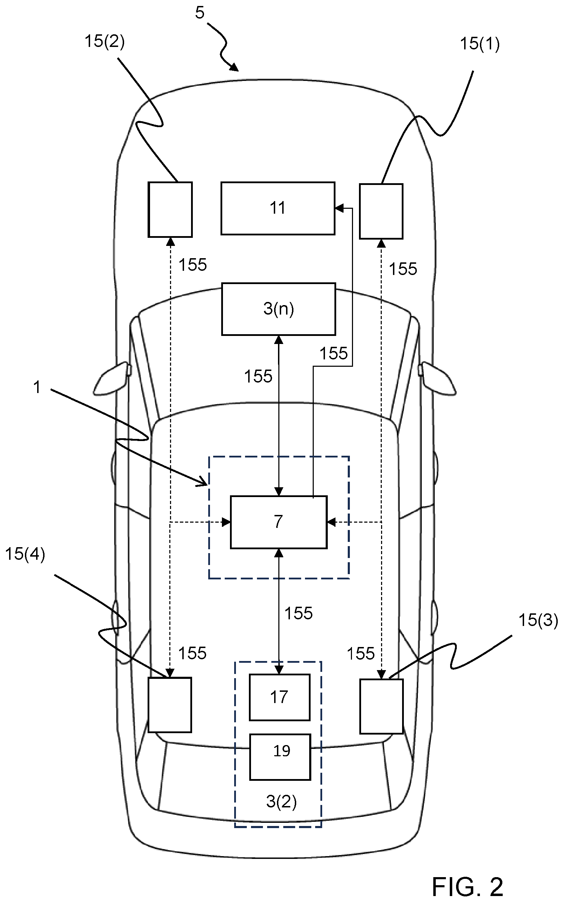

As shown in Figure 1, the control system 1 is installed in a vehicle 5 comprising four (4) wheels 9(1)-9(4). The wheels 9(1)-9(4) comprise first and second front wheels 9(1), 9(2) disposed on a front axle; and first and second rear wheels 9(3), 9(4) disposed on a rear axle. The vehicle 5 is a road vehicle, such as an automobile, a sports utility vehicle (SUV) or a utility vehicle. As shown in Figures 1 and 2, the vehicle 5 in the present embodiment is an automobile. The vehicle 5 comprises one or more torque-generating machine 11, such as an internal combustion engine (ICE) and/or an electric drive unit. The vehicle 5 may be a battery electric vehicle (BEV), a hybrid electric vehicle (HEV), a plug-in hybrid electric vehicle (PHEV) or an internal combustion engine (ICE) vehicle. The front wheels 9(1), 9(2) and/or the rear wheels 9(3), 9(4) may be driven by the one or more torque-generating machine 11. The vehicle 5 is two-wheel drive and only the front wheels 9(1)-9(2) are driven. The torque-generating machine 11 comprises an internal combustion engine 11 for driving the front wheels 9(1), 9(2) of the vehicle 5. Alternatively, or in addition, the internal combustion engine 11 may drive the rear wheels 9(1), 9(2) of the vehicle 5. The vehicle 5 may comprise one or more electric drive unit (not shown).

Figures 1 and 2 show the control system 1 for the vehicle 5. The vehicle 5 is suitable for off-road use, that is for use on terrain other than regular tarmac road surfaces. The control system 1 controls one or more of the vehicle subsystems 3(n) including, but not limited to, a propulsion (or engine) system 3(1), a transmission system 3(2), a front wheel steering system 3(3), a brake system 3(4), a suspension system 3(5), a differential system 3(6), a traction control system 3(7), a ride (damping) system 3(8) and a rear wheel steering system 3(9). The vehicle subsystems 3(n) may be controlled independently of each other. Alternatively, two or more of the vehicle subsystems 3(n) may be controlled in combination with each other. The propulsion system 3(1) and the transmission system 3(2) in combination form a powertrain system. Although nine subsystems are illustrated as being under the control of the control system 1, in practice a greater number of vehicle subsystems 3(n) may be included on the vehicle 5 and may be under the control of the control system 1. The vehicle subsystems 3(n) are described herein as having separate control units. It will be understood that the control units of two or more of the plurality of vehicle subsystems 3(n) may be combined, for example in a centralised control unit.

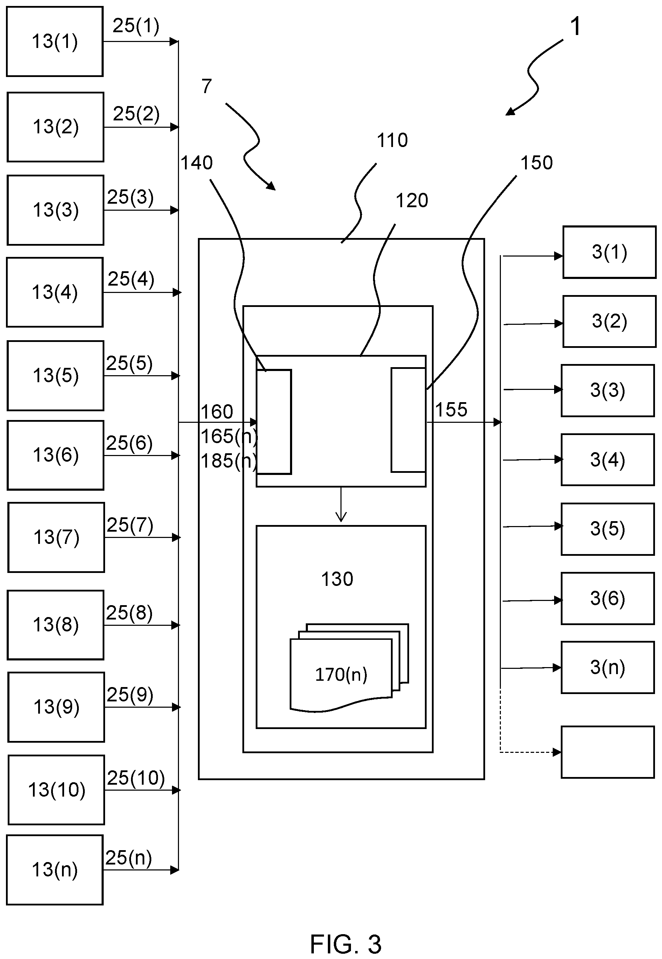

The control system 1 comprises a vehicle control unit 7. The vehicle control unit 7 as illustrated in Figure 3 comprises one controller 110, although it will be appreciated that this is merely illustrative. The controller 110 comprises processing means 120 and memory means 130. The processing means 120 may be one or more electronic processing device 120 which operably executes computer-readable instructions. The memory means 130 may be one or more memory device 130. The memory means 130 is electrically coupled to the processing means 120. The memory means 130 is configured to store instructions, and the processing means 120 is configured to access the memory means 130 and execute the instructions stored thereon. The controller 110 comprises an input means 140 and an output means 150. The input means 140 may comprise an electrical input 140 of the controller 110. The output means 150 may comprise an electrical output 150 of the controller 110.

The vehicle control unit 7 is configured to output control signals 155 to control one or more of the vehicle subsystems 3(n). The control signals 155 configure the subsystems 3(n) in a manner appropriate to the driving conditions for the vehicle 5. The control signals 155 may, for example, configure the vehicle subsystems 3(n) to control the vehicle 5 in dependence on a determination of a terrain type on which the vehicle is operating (referred to as the terrain type). The control signals 155 comprise electrical signals 155 which are output from the electrical output 150.

The vehicle control unit 7 receives a plurality of input signals 160 from the vehicle sensors 13(n) provided on the vehicle 5. The input signals 160 are representative of a variety of different parameters associated with vehicle motion and status. The input signals 160 provide, or are used to calculate, a plurality of terrain indicator parameters 165(n) which are indicative of the terrain type on which the vehicle 5 is operating The vehicle control unit 7 is configured to determine an appropriate control strategy for one or more of the vehicle subsystems 3(n) in dependence on the terrain indicator parameters 165(n). The vehicle control unit 7 in the present embodiment is configured to classify the terrain as one of the following terrain types: on-road; grass/gravel/snow; mud and ruts; sand; and rocks. The classification of the terrain may be modified, for example to include fewer terrain types or additional terrain types.

The vehicle subsystems 3(n) are controlled in dependence on a selected one of a plurality of subsystem control modes 170(n). Each of the subsystem control modes 170(n) define one or more operating parameter of the vehicle subsystems 3(n). The vehicle subsystems 3(n) are controlled in dependence on the selected subsystem control mode 170(n). A plurality of subsystem control modes 170(n) are predefined. As described herein, each of the plurality of subsystem control modes 170(n) corresponds to one or more terrain type. The subsystem control modes 170(n) configure the vehicle subsystems 3(n) The vehicle control unit 7 is configured to select one of the plurality of subsystem control modes 170(n) in dependence on one or more of the plurality of terrain indicator parameters 165(n). A mode selection probability (weighting) 31(n) is calculated for each of the subsystem control modes 170(n) in dependence on the terrain indicator parameters 165(n). The vehicle control unit 7 selects one of the subsystem control modes 170(n) in dependence on the calculated mode selection probabilities. The mode selection probabilities for the subsystem control modes 170(n) are compared with each other to determine which one of the plurality of subsystem control modes 170(n) is suitable for the current operating conditions. The vehicle control unit 7 may, for example, integrate the mode selection probability 31(n) of each of the subsystem control modes 170(n). The integration may determine a positive difference between the calculated mode selection probability 31(n) of the current selected subsystem control mode 170(n) and the calculated mode selection probability 31(n) of each of the other subsystem control modes 170(n). The vehicle control unit 7 may change the selected subsystem control mode 170(n) when the integration value exceeds a predetermined threshold, or the current subsystem control mode selection probability 31(n) is equal to zero or below a predetermined threshold.

Each of the plurality of subsystem control modes 170(n) is associated with a corresponding one of a plurality of terrain classifications. The subsystem control modes 170(n) comprise the following: general driving control mode 170(1); Grass/Gravel/Snow (GGS) control mode 170(2); mud and ruts control mode 170(3); sand control mode 170(4); and rock crawl control mode 170(5). The general driving control mode 170(1) is appropriate for on-road driving and may, for example, configure the suspension to prioritise comfort. The Grass/Gravel/Snow (GGS) control mode 170(2) may adapt throttle response and configures the transmission to prioritise traction. The mud and ruts control mode 170(3) may allow increased wheel spin to enable traversal of muddy terrain. The sand control mode 170(4) may map the throttle response to help maintain momentum through sand. The rock crawl control mode 170(5) may comprise configuring a throttle map or a torque map of the internal combustion engine 11 for performing rock-crawl manoeuvres. The rock crawl control mode may comprise controlling the transfer case to select a low transmission ratio.

The vehicle 5 comprises a plurality of vehicle sensors 13(n) for measuring external variables. The sensors 13(n) are configured to measure an operating parameter of the vehicle 5 and to output sensor signals 15(n) providing an indication of the measured variable. The sensor signals 15(n) are supplied to the vehicle control unit 7 as the input signals 160. The sensor signals 15(n) are electrical signals. The sensors 13(n) in the present embodiment are configured to provide a continuous (i.e., an uninterrupted) indication of the operating parameter. The sensor signals 15(n) provide a quantized representation of the measured operating parameter.

The sensors 13(n) in the present embodiment comprise: wheel speed sensors 13(1) for measuring the speed of each of the wheels 9(1)-9(4); a body pitch sensor 13(2); a yaw sensor 13(3); a longitudinal acceleration sensor 13(4); a torque sensor (or torque estimator) 13(6); a gradient sensor (or gradient estimator) 13(7); a brake pedal position sensor 13(8); an acceleration pedal position sensor 13(9); longitudinal, lateral, vertical motion sensors 13(10); and tire pressure monitoring sensors (TPMS) 13(11). One or more sensor may be provided to measure one or more atmospheric indicator parameter 185(n). For example, the sensors 13(n) comprise an ambient temperature sensor 13(5) configured to measure an ambient temperature AMT. The wheel speed sensors 13(1) output a wheel speed signal 15(1) indicating the measured wheel speed of each wheel 9(1)-9(4). The body pitch sensor 13(2) outputs a body pitch signal 15(2) indicating a measured body pitch angle of the vehicle 5 (i.e. a measured rotation of the vehicle 5 about the transverse axis Y). The yaw sensor 13(3) outputs a yaw signal 15(3) indicating a measured yaw angle of the vehicle 5 (i.e. a measured rotation of the vehicle 5 about the vertical axis Z). The longitudinal acceleration sensor 13(4) outputs a longitudinal acceleration signal 15(4) indicating a measured longitudinal acceleration of the vehicle 5 (i.e. acceleration of the vehicle 5 along the longitudinal axis X). The ambient temperature sensor 13(5) outputs an ambient temperature signal 15(4) indicating a measured atmospheric temperature. The torque sensor 13(6) outputs a torque signal 15(6) indicating a torque (Nm) generated by the internal combustion engine 11 (and/or an electric traction motor). The gradient sensor 13(7) outputs a gradient signal 15(7) indicating a measured or estimated gradient of the surface on which the vehicle 5 is operating. The brake pedal sensor 13(8) outputs a brake pedal signal 15(8) indicating a position of the brake pedal (not shown), for example indicating an extent to which the brake pedal is depressed. The accelerator pedal sensor 13(9) outputs an accelerator pedal signal 15(9) indicating a position of the accelerator pedal (not shown), for example indicating an extent to which the accelerator pedal is depressed. The longitudinal, lateral, vertical motion sensors 13(10) output motion signals indicating the motion of the vehicle 5 along each reference axis X, Y, Z. The vehicle 5 may comprise an inertial measurement unit (not shown). The inertial measurement unit may, for example, comprise one or more accelerometer. One or more of the pitch sensor 13(2), the yaw sensor 13(3), the longitudinal acceleration sensor 13(4) and the longitudinal, lateral, vertical motion sensors 13(10) may be incorporated into the inertial measurement unit.

A friction estimator 17 is provided to estimate a coefficient of friction (µ) of the surface on which the vehicle 5 is operating. The coefficient of friction (µ) may, for example, be estimated in dependence on detection of a wheel slip event. A surface (road) roughness estimator 19 is provided to determine a surface roughness SFR parameter which quantifies a roughness of the surface on which the vehicle 5 is operating. The surface roughness SFR may be defined with respect to a scale, for example as a percentage (%) of an upper value. The surface roughness SFR estimator 19 may, for example quantify the surface roughness SFR in dependence on the signals received from one or more of the longitudinal, lateral, vertical motion sensors 13(10). The ambient temperature AMT is measured by the ambient temperature AMT sensor 13(5).

As outlined above, the vehicle control unit 7 is configured to select one of the plurality of subsystem control modes 170(n) corresponding to the current terrain type. A mode selection probability (weighting) 31(n) is determined for each of the subsystem control modes 170(n). The mode selection probability 31(n) provide an indication of the likelihood that the associated subsystem control mode 170(n) is appropriate for the terrain type on which the vehicle 5 is operating. The mode selection probabilities 31(n) may, for example, comprise one or more of the following:
1. A general driving mode selection probability 31(1) associated with the general driving control mode 170(1).
2. A Grass/Gravel/Snow (GGS) mode selection probability 31(2) associated with the Grass/Gravel/Snow control mode 170(2).
3. A mud and ruts mode selection probability 31(3) associated with the mud and ruts control mode 170(3).
4. A sand mode selection probability 31(4) associated with the sand control mode 170(4).
5. A rock crawl mode selection probability 31(5) associated with the rock crawl control mode 170(5).

The mode selection probabilities 31(n) are determined in dependence on one or more of the terrain indicator parameters 165(n). As described herein, the terrain indicator parameters 165(n) may be derived from a variable measured by the sensors 13(n). The variable may, for example, represent an operating condition or an operating state of a vehicle subsystem 3(n). In the present embodiment, the mode selection probabilities 31(n) are also determined in dependence on the one or more atmospheric condition indicator 185(n). The one or more atmospheric condition indicator 185(n) comprise the ambient temperature AMT measured by the temperature sensor 3(5). A mode selection probability 31(n) is calculated for each of the subsystem control modes 170(n). The calculated mode selection probabilities 31(n) are compared to determine which one of the plurality of subsystem control modes 170(n) is appropriate for the current operating conditions. The mode selection probability 31(n) of the current selected subsystem control mode 170(n) is compared to each of the other mode selection probabilities(n). In the present embodiment, each mode selection probability 31(n) is integrated over time. The integral of the mode selection probability 31(n) of the current selected subsystem control mode 170(n) is compared to the integral of each of the other mode selection probability(n). The difference between the integral calculated for the selected subsystem control mode 170(n) and each of the other subsystem control modes 170(n) is calculated. The subsystem control mode 170(n) is changed to one of the other subsystem control modes 170(n) in dependence on a determination that the calculated difference for that subsystem control mode 170(n) is greater than or equal to a threshold value.

The vehicle control unit 7 is configured to select one of the plurality of subsystem control modes 170(n). The subsystem control modes 170(n) each configure one or more of the vehicle subsystems 3(n) for the associated terrain type. The subsystem control modes 170(n) may, for example, define one or more control parameter for controlling operation of the at least one vehicle subsystems 3(n). As described herein, the subsystem control modes 170(n) according to the present embodiment comprise one or more configurable control parameter CCP(n). The or each configurable control parameter CCP(n) defines an operating parameter of a corresponding vehicle subsystem 3(n). The configurable control parameter CCP(n) may be modified in dependence on one or more of the terrain indicator parameter 165(n). The one or more terrain indicator parameter 165(n) provide an indication of the structure or composition of the terrain type on which the vehicle 5 is operating. The configurable control parameter CCP(n) may optionally also be modified in dependence on one or more of the atmospheric indicator parameters 185(n). The one or more atmospheric indicator parameter 165(n) provide an indication of the ambient conditions, such as the temperature. The one or more atmospheric indicator parameter 165(n) may provide an indirect indication of the terrain type on which the vehicle 5 is operating. The configurable control parameter CCP(n) enable the vehicle subsystem 3(n) to be re-configured within the operating parameters defined by the selected one of the subsystem control modes 170(n). The vehicle subsystems 3(n) may thereby be controlled in accordance with the current terrain type. These changes can be implemented without changing to a different subsystem control mode 170(n).

The one or more configurable control parameter CCP(n) are defined with respect to one or more of the vehicle subsystems 3(n). The configurable control parameters CCP(n) can be modified to configure the associated vehicle subsystem(s) (3) for operation on the current surface or terrain type. The configurable control parameters CCP(n) are now described by way of example. It will be understood that one or more of the configurable control parameters CCP(n) described herein may be omitted.

The propulsion system 3(1) defines a first configurable control parameter CCP(1) comprising or consisting of one or more torque curve TC(n). The transmission system 3(2) defines a second configurable control parameter CCP(2) comprising or consisting of one or more gear shift map GM(n) for controlling the selection of a drive ratio. The front wheel steering system 3(3) defines a third configurable control parameter CCP(3) comprising or consisting of one or more front wheel steering map FWSM(n). The brake system 3(4) defines a fourth configurable control parameter CCP(4) comprising or consisting of one or more braking map BM(n). The suspension system 3(5) defines a fifth configurable control parameter CCP(5) comprising or consisting of one or more suspension height setting SC(n). The differential system 3(6) defines a sixth configurable control parameter CCP(6) comprising or consisting of one or more differential configuration DC(n). The traction control system 3(7) defines a seventh configurable control parameter CCP(7) comprising or consisting of one or more wheel slip threshold STH(n). The ride system 3(8) defines an eighth configurable control parameter CCP(8) comprising or consisting of one or more damper setting DS(n). The rear wheel steering system 3(9) defines a ninth configurable control parameter CCP(9) comprising or consisting of one or more rear wheel steering map RWSM(n). The configurable control parameters CCP(n) for one or more of the vehicle subsystems 3(n) may comprise two or more configurations. In the present embodiment, the configurable control parameters CCP(n) associated with each of the vehicle subsystems 3(n) comprise first, second and third configurations. The first configuration of each of the configurable control parameters CCP(n) is referred to herein as a default configuration, for example associated with a general driving control mode. The second and third configurations are described herein in relation to the first configuration, for example to define higher and/or lower operating parameter(s) associated with the same vehicle subsystem 3(n). A summary of the configurable control parameters CCP(n) is presented in TABLE A.

**TABLE A**

| | **Configurable Control Parameter CCP(n)** | First Configuration | Second Configuration | Third Configuration |
|---|---|---|---|---|
| Propulsion System 3(1) | Torque Curve TC(n) | Default torque curve TC(1) | Increased response torque curve TC(2) | Reduced response torque curve TC(3) |
| Transmission System 3(2) | Gear Shift Map GM(n) | Default gear shift map GM(1) | Higher gear selection shift map GM(2) | Lower gear selection shift map GM(3) |
| Front Wheel Steering System 3(3) | Front Wheel Steering Map FWSM(n) | Default steering assistance map FWSM(1) | Firmer steering (reduced assistance) map FWSM(2) | Lighter steering (increased assistance) map FWSM(3) |
| Brake System 3(4) | Braking Map BM(n) | Default brake map BM(1) | Increased brake pedal travel map BM(2) | N/A |
| Suspension System 3(5) | Suspension height setting SC(n) | Automated suspension height adjustment SC(1) | Off-road 1 (Increased height) SC(2) | Off-road 2 (Largest height) SC(3) |
| Differential System 3(6) | Differential Configuration DC(n) | Automated differential control DC(1) | Lock centre differential DC(2) | Lock centre and rear differentials DC(3) |
| Traction Control System 3(7) | Wheel Slip Threshold STH(n) | Default wheel spin setting STH(1) | Decreased wheel spin STH(2) | Increased wheel spin STH(3) |
| Ride System 3(8) | Damper Setting DS(n) | Default damper setting DS(1) | Softer damper setting DS(2) | Firmer damper setting DS(3) |
| Rear Wheel Steering System 3(9) | Rear Wheel Steering Map RWSM(n) | Out-of-phase with front wheel steering RWSM(1) | In-phase with front wheel steering RWSM(2) | N/A |

The operation of the vehicle control unit 7 will now be described with respect to the GGS control mode 170(2). The GGS control mode 170(2) is selected to configure one or more of the vehicle subsystems 3(n) for vehicle operation on terrain classified as being Grass/Gravel/Snow. The GGS mode selection probability 31 (2) is determined in dependence on one or more of the following terrain indicator parameters 165(n):
(i) a rolling resistance (N) 90 of the vehicle 5;
(ii) an estimated coefficient of friction (µ) of a surface on which the vehicle 5 is operating; and
(iii) a surface roughness SFR parameter.

It will be understood that other terrain indicator parameters 165(n) may be used to determine the GGS mode selection probability 31(2). The GGS mode selection probability 31(2) may optionally also be determined in dependence on one or more atmospheric indicator parameter 185(n), such as the ambient temperature AMT.

The rolling resistance Frr represents the force resisting the motion of the vehicle 5 on the terrain. The rolling resistance Frr on a flat surface (i.e., no gradient) may be calculated using the following equation: ${F}_{rr} = f ⋅ m ⋅ g$ Whereby:
Frr is the rolling resistance force (N);
f is the coefficient of rolling resistance;
m is the vehicle mass (kg); and
g is the gravitational acceleration (9.81 m/s²).

The calculation for the rolling resistance Frr on an inclined surface (at a gradient α) may be calculated using the following equation: ${F}_{rr} = f ⋅ m ⋅ g ⋅ cos \left(α\right)$ Whereby:
Frr is the rolling resistance force (N);
f is the coefficient of rolling resistance;
m is the vehicle mass (kg);
g is the gravitational acceleration (9.81 m/s²); and
a is the gradient (°).

The coefficient of rolling resistance f is greater for a surface which is deformable. For example, the coefficient of rolling resistance f is greater for a terrain comprising or consisting of shallow snow than a terrain comprising or consisting of grass. Furthermore, the coefficient of rolling resistance f may vary for the same terrain type. In the case of terrain comprising or consisting of snow, the coefficient of rolling resistance f typically increases as the depth of the snow increases.

The GGS control mode 170(2) comprises a plurality of configurable control parameters CCP(n). The configurable control parameters CCP(n) define operating parameters for the vehicle subsystems 3(n). The control system 1 is configured to modify the configurable control parameters CCP(n) in dependence on the one or more terrain indicator parameter 165(n). The configurable control parameters CCP(n) are modified in dependence on a determination that the one or more terrain indicator parameter 165(n) is indicative of the vehicle 5 operating on a terrain comprising or consisting of deep snow (referred to herein as deep snow terrain). References herein to deep snow refer to snow having a depth which is greater than a predetermined depth, for example equivalent to a radius of one of the wheels 9(1)-9(4). Conversely, references herein to shallow snow refer to snow having a depth which is less than the predetermined depth. Other depths may be defined to differentiate between shallow snow and deep snow. The control system 1 determines that the terrain type is deep snow terrain in dependence on the one or more terrain indicator parameter 165(n). When the GGS control mode 170(2) is selected, the control system 1 determines that the terrain type is deep snow terrain in dependence on the rolling resistance Frr. The rolling resistance threshold RRT is predefined. The rolling resistance threshold RRT is defined as 2300N. The rolling resistance threshold RRT may be less than or greater than 2300N. Other terrain indicator parameter 165(n) may be used in this determination.

The terrain type may optionally also be determined in dependence on one or more atmospheric indicator parameter 185(n). The one or more atmospheric indicator parameter 185(n) may be used in combination with the terrain indicator parameter 165 (n) to determine the terrain type. In the present embodiment, the one or more atmospheric indicator parameter 185(n) comprise the ambient temperature AMT measured by the ambient temperature sensor 3(5). The control system 1 makes a positive determination that the terrain type is deep snow terrain in dependence on a determination that the ambient temperature AMT is less than a temperature threshold TTH and that the rolling resistance Frr is greater than a rolling resistance threshold RRT. Conversely, the control system 1 makes a negative determination that the terrain type is deep snow terrain in dependence on a determination that the ambient temperature AMT is greater than the temperature threshold TTH and/or that the rolling resistance Frr is less than the rolling resistance threshold RRT. The temperature threshold TTH is defined as -5°C in the present embodiment. The temperature threshold may be less than or greater than -5°C.

The control system 1 is configured to modify one or more of the plurality of configurable control parameters CCP(n) in dependence on a positive determination that the terrain type is deep snow terrain. The control system 1 is configured to implement (or maintain) the one or more configurable control parameter CCP(n) in a default (or standard) setting in dependence on a negative determination that the terrain type is deep snow terrain. The plurality of configurable control parameter CCP(n) may be grouped together to form one or more subsidiary subsystem control mode 175(n)s 170(n). The one or more subsidiary subsystem control mode 175(n) may be selected within the current selected subsystem control mode 170(n). The subsystem control mode 170(n) and the one or more subsidiary subsystem control mode 175(n) have a hierarchical structure. The one or more subsidiary subsystem control mode 175(n) is selectable within the subsystem control mode 170(n). As described herein, the one or more subsidiary subsystem control mode 175(n) is selected in dependence on one or more of the terrain indicator parameter 165(n). The one or more subsidiary subsystem control mode 175(n) may optionally also be selected in dependence on one or more atmospheric indicator parameter 165(n).

In the present example, a subsidiary subsystem control mode 175(1) is selected within the GGS control mode 170(2) in dependence on a positive determination that the terrain type is deep snow terrain; this may be referred to as a deep snow subsidiary subsystem control mode 175(1). The deep snow subsidiary subsystem control mode 175(1) is predefined. Alternatively, or in addition, a subsidiary subsystem control mode 175(2) may be selected in dependence on a determination that the terrain type is shallow snow terrain (referred to herein as shallow snow terrain); this may be referred to as a shallow snow subsidiary subsystem control mode 175(2). Alternatively, or in addition, a subsidiary subsystem control mode 175(3) may be selected in dependence on a determination that the terrain comprises or consists of gravel; this may be referred to as a gravel subsidiary subsystem control mode 175(n). The or each subsidiary subsystem control mode 175(n) is selectable when the GGS control mode 170(2) is selected. It will be understood that one or more subsidiary subsystem control mode 175(n) may be defined in respect of one or more of the other control modes 170(n). The configurable control parameters CCP(n) associated with the vehicle subsystems 3(n) are described below.

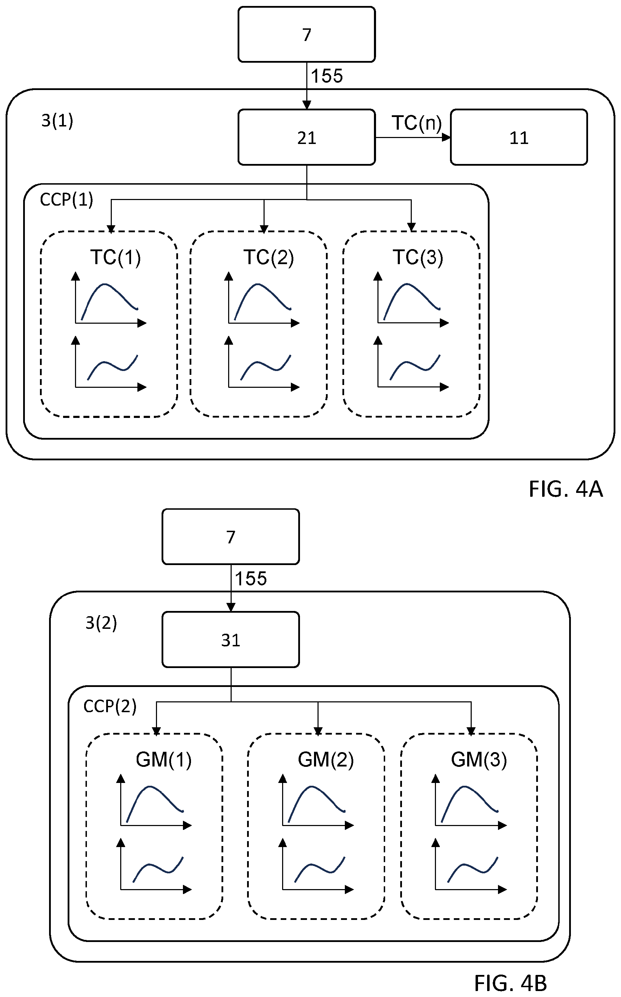

The internal combustion engine 11 forms part of the propulsion system 3(1). As shown schematically in Figure 4A, the propulsion system 3(1) comprises a propulsion control unit 21 having one or more electronic processor. The propulsion control unit 21 is configured to control operation of the internal combustion engine 11. The propulsion control unit 21 defines the first configurable control parameter CCP(1) for controlling operation of the internal combustion engine 11. As described herein, the control system 1 is configured to modify the first configurable control parameter CCP(1) in dependence on one or more of the terrain indicator parameters 165(n). The control system 1 may optionally also modify the first configurable control parameter CCP(1) in dependence on the one or more atmospheric indicator parameter 185(n). The first configurable control parameter CCP(1) comprises a torque curve TC(n) for the internal combustion engine 11. The propulsion control unit 21 defines a plurality of the torque curves TC(n). The torque curves TC(n) are different from each other. For example, the torque curves TC(n) may have different profiles, for example modifying delivery of a maximum torque. The first configurable control parameter CCP(1) is modified by changing the selected torque curve TC(n). The torque curve TC(n) is selected in dependence on one or more of the terrain indicator parameters 165(n). The propulsion control unit 21 defines a first torque curve TC(1), a second torque curve TC(2) and a third torque curve TC(3). The first torque curve TC(1) represents the default or normal torque curve for the internal combustion engine 11. The first torque curve TC(1) represents the default or normal torque curve for the internal combustion engine 11. The first torque curve TC(1) is selected when the vehicle 5 is operating in the general driving control mode 170(1). The second torque curve TC(2) represents an increased response torque curve for the internal combustion engine 11. The second torque curve TC(2) represents a responsive torque curve for the internal combustion engine 11. The second torque curve TC(2) helps provide increased torque delivery in dependence on a torque request. This may be appropriate when operating on terrain having a high drag surface, such as deep snow or soft sand. The third torque curve TC(3) provides a more gradual delivery of torque in dependence on a torque request. This may be appropriate when operating on terrain having a low coefficient of friction, such as snow/ice and wet grass, since it may facilitate a pull-away manoeuvre while avoiding or reducing wheel spin, thereby providing increased traction. The torque curves TC(n) are predefined. It will be understood that less than or more than three torque curves TC(n) may be defined for selection by the control system 1.

The third torque curve TC(3) provides a reduced response and is suitable for surfaces having a low coefficient of fiction. The second torque curve TC(2) provides an increased response and is suitable for high drag surfaces, such as deep snow or soft sand. The control system 1 outputs the control signal 155 to request selection of one of the first, second and third torque curves TC(1)-TC(3) in dependence on one or more of the terrain indicator parameters 165(n). The control signal 155 controls the propulsion system 3(1) to select one of the first, second and third torque curves TC(1)-TC(3). In dependence on a determination that the GGS control mode 170(2) is selected, the control system 1 is configured to modify the first configurable control parameter CCP(1) as follows:
i. Select the third torque curve TC(3) in dependence on a determination that the terrain type is grass terrain.
ii. Select the first torque curve TC(1) in dependence on a determination that the terrain type is gravel terrain.
iii. Select the third torque curve TC(3) in dependence on a determination that the terrain type is shallow snow terrain.
iv. Select the first torque curve TC(1) in dependence on a determination that the terrain type is deep snow terrain.
v. Select the first torque curve TC(1) in dependence on a determination that the terrain type is firm sand.
vi. Select the second torque curve TC(2) in dependence on a determination that the terrain type is soft sand.

The selection of one of the first, second and third torque curves TC(1)-TC(3) is performed independently of the selected subsystem control mode 170(n). Thus, the selected torque curve TC(n) can be changed in dependence on one or more of the terrain indicator parameters 165(n) without changing the subsystem control mode 170(n).

As shown schematically in Figure 4B, the transmission system 3(2) comprises a transmission control unit 31 and a transmission 33. The transmission 33 is drivingly connected to the internal combustion engine 11 and is operable selectively to engage one of a plurality of drive ratios. The drive ratios typically comprise a plurality of forward drive ratios, a reverse drive ratio and a neutral (or disengaged) drive ratio. The at least one transmission control unit 31 comprises one or more electronic processor. The at least one transmission control unit 31 is configured to control operation of the transmission 31.

The transmission control unit 31 defines the second configurable control parameter CCP(2) for controlling operation of the transmission 33. As described herein, the control system 1 outputs the control signal 155 to configure the second configurable control parameter CCP(2) in dependence on one or more of the terrain indicator parameters 165(n). The second configurable control parameter CCP(2) comprise a gear shift map GM(n) for controlling the selection of a drive ratio by the transmission 31. A plurality of the gear shift maps GM(n) are defined. The second configurable control parameter CCP(2) is modified by changing the selected gear shift map GM(n). The gear shift maps GM(n) each define an upshift pattern and/or a downshift pattern for the transmission 33. The gear ratio maps GM(n) may, for example, define a relationship between each of the drive ratios and operating parameters of the vehicle 5, such as a torque (Nm) and/or a speed (km/h). The gear ratio map GM(n) may use other parameters, such as engine speed (rpm). The transmission control unit 31 defines a first gear shift map GM(1), a second shift map GM(2) and a third shift map GM(3). The control system 1 in the present embodiment is configured to control the transmission system 3(2) to select one of the first gear shift map GM(1), the second gear shift map GM(2) and the third gear shift map GM(3). The first gear shift map GM(1) represents a default or normal gear shift map for the transmission 31. The second gear shift map GM(2) represents a higher gear shift map for the transmission 31. The higher gear shift map defines a higher engine speed (rpm) for changing gear. The second gear shift map GM(2) may delay selection of a higher gear compared to the first (default) gear shift map GM(1). This typically results in a higher engine speed (rpm), for example holding on to one or more lower gear (such as, gears one to four) as the engine speed increases. This may enable the engine to continue operating at or close to a peak power. The second gear shift map GM(2) may be selected for operation on a terrain type comprising a high drag surface, such as snow or soft sand. The third gear shift map GM(3) represents a lower gear shift map for the transmission 31. The lower gear shift map defines a lower engine speed (rpm) for changing gear. The third gear shift map GM(3) may advance selection of a higher gear compared to the first (default) gear shift map GM(1). The third gear shift map GM(3) may prioritise selection of (or holding) a higher gear compared to the first (default) gear shift map GM(1). This typically results in a lower engine speed (rpm), for example short shifting through the lower gears (such as gears one to four) as the engine speed increases. This may delay or avoid peak power delivery in the engine speed range. The third gear shift map GM(3) may be selected for operation on a terrain type comprising a surface having a low coefficient of friction, such as grass. The first, second and third gear shift maps GM(1)-GB(3) are predefined. It will be understood that less than or more than three (3) gear shift maps may be defined for selection by the control system 1. The transmission system 3(2) may optionally comprise a transfer case 35 operable selectively to engage a high drive ratio and a low drive ratio. The at least one transmission control unit 31 is configured to control operation of the transfer case 35. The control system 1 may optionally control the transmission system 3(2) to control selection of the high drive ratio and the low drive ratio.

The control system 1 outputs the control signal 155 to request selection of one of the first, second and third gear shift maps GM(1)-GM(3) in dependence on one or more of the terrain indicator parameters 165(n). The control signal 155 controls the transmission system 3(1) to select one of the first, second and third gear shift maps GM(1)-GM(3). In dependence on a determination that the GGS control mode 170(2) is selected, the control system 1 is configured to modify the second configurable control parameter CCP(2) as follows:
i. Select the second gear shift map GM(2) in dependence on a determination that the terrain type is grass terrain.
ii. Select the first gear shift map GM(1) in dependence on a determination that the terrain type is gravel terrain.
iii. Select the second gear shift map GM(2) in dependence on a determination that the terrain type is shallow snow terrain.
iv. Select the third gear shift map GM(3) in dependence on a determination that the terrain type is deep snow terrain.
v. Select the first gear shift map GM(1) in dependence on a determination that the terrain type is firm sand.
vi. Select the third gear shift map GM(3) in dependence on a determination that the terrain type is soft sand.

The selection of one of the first and second gear shift maps GM(1), GM(2) is performed independently of the selected subsystem control mode 170(n). Thus, the first and second gear shift maps GM(1), GM(2) can be changed in dependence on one or more of the terrain indicator parameters 165(n) without changing the subsystem control mode 170(n).

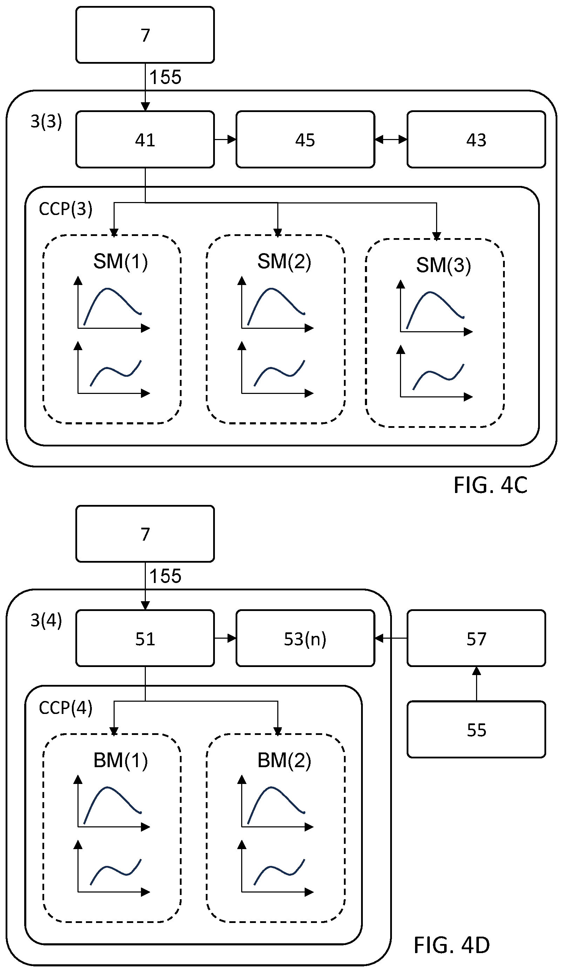

As shown schematically in Figure 4C, the front wheel steering system 3(3) comprises a front wheel steering control unit 41 and a steering wheel 43 for steering the front wheels 9(1)-9(2). The front wheel steering system 3(3) also comprises a steering assist actuator 45 to assist the steering of the vehicle 5. A steering angle sensor 47 is provided for measuring a steering angle of the steering wheel 43. The steering assist actuator 45 is an electric actuator in the present embodiment. In a variant, the steering assist actuator 45 is a hydraulic actuator. The front wheel steering control unit 41 comprises one or more electronic processor. The front wheel steering control unit 41 is configured to control operation of the steering assist actuator 43. The front wheel steering control unit 41 defines the third configurable control parameter CCP(3) for controlling operation of the steering assist actuator 45. As described herein, the control system 1 is configured to modify the one or more third configurable control parameter CCP(3) in dependence on one or more of the terrain indicator parameters 165(n). The third configurable control parameter CCP(3) comprises a front wheel steering map FWSM(n) for the steering assist actuator 45. A plurality of the front wheel steering maps FWSM(n) are defined. The third configurable control parameter CCP(3) is modified by changing the selected front wheel steering map FWSM(n). The or each front wheel steering map FWSM(n) defines a relationship between a steering input and a magnitude of the assistance generated by the steering assist actuator 43. The steering input is a variable measured by the steering angle sensor 47. The steering input comprises a steering angle and/or a rate of change of the steering angle. In the present embodiment, the steering control unit 41 defines a first front wheel steering map FWSM(1), a second front wheel steering map FWSM(2), and a third front wheel steering map FWSM(3). The control system 1 is configured to control the front wheel steering system 3(3) to select one of the first front wheel steering map FWSM(1), the second front wheel steering map FWSM(2) and the third front wheel steering map FWSM(3). The first front wheel steering map FWSM(1) represents a default or normal front wheel steering map for the steering assist actuator 45. The second front wheel steering map FWSM(2) represents a firm front wheel steering map (i.e., reduced assistance) for the steering assist actuator 45. The third front wheel steering map FWSM(3) represents a lighter front wheel steering map (i.e., increased assistance) for the steering assist actuator 45. The front wheel steering maps FWSM(1)-FWSM(3) are predefined. It will be understood that less than or more than three (3) front wheel steering maps FWSM(n) may be defined for selection by the control system 1 .

The second front wheel steering map FWSM(2) provides a firmer steering input and is suitable for surfaces having a low coefficient of friction since this tends to slow down the steering inputs, thereby reduce the risk of putting the vehicle 5 into dynamic conditions such as oversteer. The third front wheel steering map FWSM(3) provides a lighter steering input and is suitable for surfaces having a high drag, such as deep snow or soft sand, to reduce workload on the driver. The control system 1 outputs the control signal 155 to request selection of one of the first, second and third front wheel steering map FWSM(1)-FWSM(3) in dependence on one or more of the terrain indicator parameters 165(n). The control signal 155 controls the front wheel steering system 3(3) to select one of the first and second front wheel steering maps FWSM(1), FWSM(2). In dependence on a determination that the GGS control mode 170(2) is selected, the control system 1 is configured to modify the third configurable control parameter CCP(3) as follows:
i. Select the second front wheel steering map FWSM(2) in dependence on a determination that the terrain type is grass terrain.
ii. Select the first front wheel steering map FWSM(1) in dependence on a determination that the terrain type is gravel terrain.
iii. Select the second front wheel steering map FWSM(2) in dependence on a determination that the terrain type is shallow snow terrain.
iv. Select the third front wheel steering map FWSM(3) in dependence on a determination that the terrain type is deep snow terrain.
v. Select the first front wheel steering map FWSM(1) in dependence on a determination that the terrain type is firm sand.
vi. Select the third front wheel steering map FWSM(3) in dependence on a determination that the terrain type is soft sand.

The selection of one of the first, second and third front wheel steering maps FWSM(1)-FWSM(3) is performed independently of the selected subsystem control mode 170(n). Thus, the selected front wheel steering map FWSM(n) can be changed in dependence on one or more of the terrain indicator parameters 165(n) without changing the subsystem control mode 170(n).

As shown schematically in Figure 4D, the brake system 3(4) comprises a brake control unit 51 and a plurality of friction brakes 53(1)-53(4) for applying a braking (retardation) force to respective wheels 9(1)-9(4) of the vehicle 5. Alternatively, or in addition, braking may be performed by one or more electric machine provided on the vehicle 5. The friction brakes 53(1)-53(4) are operated in dependence on operation of a brake pedal 55. A brake pedal sensor 57 is provided to determine the position of the brake pedal 55. The brake control unit 51 comprises one or more electronic processor. The brake control unit 51 defines the fourth configurable control parameter CCP(4) for controlling operation of the friction brakes 53(1)-53(4). As described herein, the control system 1 is configured to modify the one or more fourth configurable control parameter CCP(4) in dependence on one or more of the terrain indicator parameters 165(n). The fourth configurable control parameter CCP(4) comprises the braking map BM(n) for the friction brakes 53(1)-53(4). A plurality of the braking maps BM(n) are defined. The fourth configurable control parameter CCP(4) is modified by changing the selected braking map BM(n). The braking maps BM(n) each define a relationship between the braking force applied by the friction brakes 53(1)-53(4) in dependence on a braking input. The brake system 3(4) may, for example, vary the relationship between the braking force generated by the friction brakes 53(1)-53(4) and the travel of the brake pedal 55. In the present embodiment, at least a first braking map BM(1) and a second braking map BM(2) are defined. The first braking map BM(1) represents a default or normal braking map. The second braking map BM(2) represents a longer travel map for the braking pedal 55. The first braking map BM(1) and the second braking map BM(2) are predefined. It will be understood that more than two braking maps BM(n) may be defined for selection by the control system 1.

The control system 1 outputs the control signal 155 to request selection of one of the first and second braking maps BM(1), BM(2) in dependence on one or more of the terrain indicator parameters 165(n). The control signal 155 controls the brake system 3(4) to select one of the first and second braking maps BM(1), BM(2). In dependence on a determination that the GGS control mode 170(2) is selected, the control system 1 is configured to modify the fourth configurable control parameter CCP(4) as follows:
i. Select the second braking map BM(2) in dependence on a determination that the terrain type is grass terrain.
ii. Select the first braking map BM(1) in dependence on a determination that the terrain type is gravel terrain.
iii. Select the second braking map BM(2) in dependence on a determination that the terrain type is shallow snow terrain.
iv. Select the second braking map BM(2) in dependence on a determination that the terrain type is deep snow terrain.
v. Select the first braking map BM(1) in dependence on a determination that the terrain type is firm sand.
vi. Select the second braking map BM(2) in dependence on a determination that the terrain type is soft sand.

The selection of one of the first and second braking maps BM(1), BM(2) is performed independently of the selected subsystem control mode 170(n). Thus, the braking maps BM(1), BM(2) can be changed in dependence on one or more of the terrain indicator parameters 165(n) without changing the subsystem control mode 170(n).

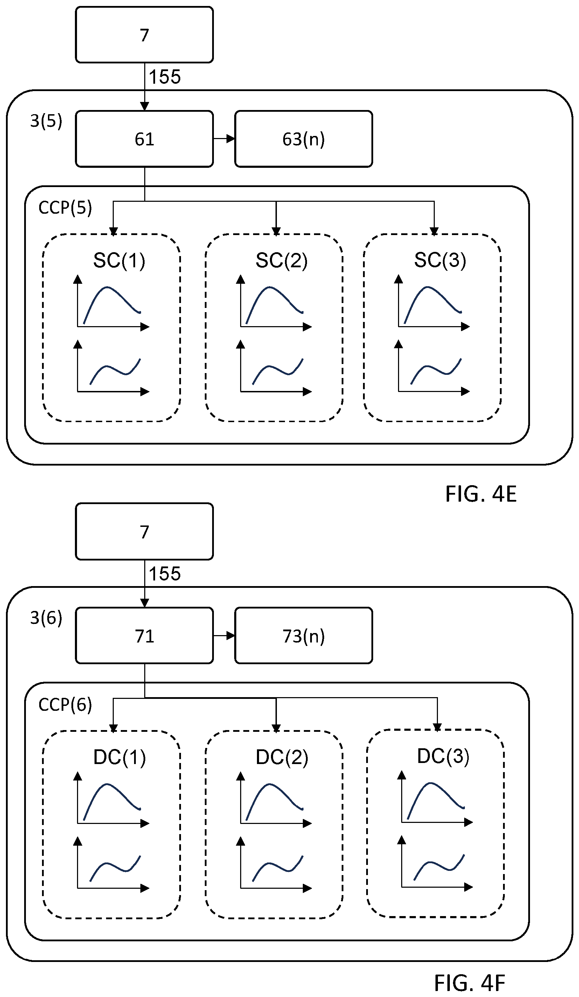

As shown schematically in Figure 4E, the suspension system 3(5) comprises a suspension control unit 61 and a plurality of suspension units 63(1)-63(4). The control system 1 is configured to control the suspension system 3(5) in dependence on one or more of the terrain indicator parameters 165(n). The suspension units 63(1)-63(4) are associated with respective wheels 9(1)-9(4) of the vehicle 5. The suspension system 3(5) in the present embodiment is an adjustable-height suspension. The height of each of the suspension units 63(1)-63(4) is adjustable. The suspension system 3(5) may, for example, be an air suspension or a mechanically adjustable suspension. The height of the suspension system 3(5) may be controlled, for example by controllably inflating and deflating one or more air bladder provided in the suspension units 63(1)-63(4), to raise or lower the vehicle body. In a further variant, the suspension 3(5) may be an active suspension comprising one or more actuator operable to control movements of the vehicle body. The control system 1 is configured to control the suspension system 3(5), for example to adjust a height of one or more of the suspension units 63(1)-63(4).

The suspension control unit 61 defines a fifth configurable control parameter CCP(5) for controlling operation of the suspension units 63(1)-63(4). As described herein, the control system 1 is configured to modify the one or more fifth configurable control parameter CCP(5) in dependence on one or more of the terrain indicator parameters 165(n). The fifth configurable control parameter CCP(5) comprises a suspension height setting SC(n) for each of the suspension units 63(1)-63(4). A plurality of the suspension height settings SC(n) are defined. The fifth configurable control parameter CCP(5) is modified by changing the selected suspension height setting SC(n). In the present embodiment, the suspension control unit 61 defines a first suspension height setting SC(1), a second suspension height setting SC(2) and a third suspension height setting SC(3). The first suspension height setting SC(1) represents a control mode in which a height of the units 63(1)-63(4) is adjusted automatically. The second suspension height setting SC(2) represents a first off-road setting in which the suspension units 63(1)-63(4) are set to a first (intermediate) suspension height. The third suspension height setting SC(3) represents a second off-road setting in which the suspension units 63(1)-63(4) are set to a second (high) suspension height. The second suspension height is greater than the first suspension height. The suspension height settings SC(n) are predefined. It will be understood that less than or more than three (s) suspension height settings SC(n) may be defined for selection by the control system 1.

The control system 1 outputs the control signal 155 to request selection of one of first, second and third suspension height settings SC(1)-SC(3) in dependence on one or more of the terrain indicator parameters 165(n). The control signal 155 controls the suspension system 3(5) to select one of the first, second and third suspension height settings SC(1)-SC(3). In dependence on a determination that the GGS control mode 170(2) is selected, the control system 1 is configured to modify the fifth configurable control parameter CCP(5) as follows:
i. Select the first suspension height setting SC(1) in dependence on a determination that the terrain type is grass terrain.
ii. Select the first suspension height setting SC(1) in dependence on a determination that the terrain type is gravel terrain.
iii. Select the first suspension height setting SC(1) in dependence on a determination that the terrain type is shallow snow terrain.
iv. Select the third suspension height setting SC(3) in dependence on a determination that the terrain type is deep snow terrain.
v. Select the first suspension height setting SC(1) in dependence on a determination that the terrain type is firm sand.
vi. Select the first suspension height setting SC(1) in dependence on a determination that the terrain type is soft sand.

The selection of one of the suspension height settings SC(n) is performed independently of the selected subsystem control mode 170(n). Thus, the suspension height setting SC(n) can be changed in dependence on one or more of the terrain indicator parameters 165(n) without changing the subsystem control mode 170(n).

As shown schematically in Figure 4F, the differential system 3(6) comprises a differential control unit 71 and one or more lockable differential 73(n). The control system 1 is configured to control the differential system 3(6) in dependence on one or more of the terrain indicator parameters 165(n). The differential system 3(6) may, for example, comprise one or more of the following: a centre differential, a rear differential and a front differential. The differential system 3(6) in the present embodiment comprises a centre differential 73(1), a rear differential 73(2) and a front differential 73(3). The differential control unit 71 comprises one or more electronic processor.

The differential control unit 71 defines one or more sixth configurable control parameter CCP(6) for controlling operation of the or each lockable differential 73(n). As described herein, the control system 1 is configured to modify the one or more sixth configurable control parameter CCP(6) in dependence on one or more of the terrain indicator parameters 165(n). The sixth configurable control parameter CCP(6) comprises a differential configuration DC(n) for the or each lockable differential 73(n). A plurality of the differential configurations DC(n) are defined. The sixth configurable control parameter CCP(6) is modified by changing the selected differential configuration DC(n). The differential configuration DC(n) defines an operating state (i.e. locked/unlocked) for each of the centre differential 73(1), the rear differential 73(2) and the front differential 73(3). The differential control unit 71 defines a first differential configuration DC(1), a second differential configuration DC(2) and a third differential configuration DC(3). The control system 1 is configured to control the differential system 3(6) to select one of the differential configurations DC(n). The first differential configuration DC(1) defines the arrangement in which the locking and unlocking of each of the centre differential 73(1), the rear differential 73(2) and the front differential 73(3) is performed automatically. The second differential configuration DC(2) defines the arrangement in which the centre differential 73(1) is locked. The third differential configuration DC(3) defines the arrangement in which the centre differential 73(1) and the rear differential 73(2) are both locked. It will be understood that less than or more than three (3) differential configurations DC(n) may be defined for selection by the control system 1. It will be understood that the locking torques of the or each differential and the vehicle speed unlocking torques will vary for different vehicles 5.

The control system 1 outputs the control signal 155 to request selection of one of the first, second and third differential configurations DC(1)-DC(3) in dependence on one or more of the terrain indicator parameters 165(n). The control signal 155 controls the differential system 3(6) to select one of the first, second and third differential configurations DC(1)-DC(3). In dependence on a determination that the GGS control mode 170(2) is selected, the control system 1 is configured to modify the first configurable control parameter CCP(1) as follows:
i. Select the second differential configuration DC(2) in dependence on a determination that the terrain type is grass terrain.
ii. Select the second differential configuration DC(2) in dependence on a determination that the terrain type is gravel terrain.
iii. Select the first differential configuration DC(1) in dependence on a determination that the terrain type is shallow snow terrain.
iv. Select the third differential configuration DC(3) in dependence on a determination that the terrain type is deep snow terrain.
v. Select the first differential configuration DC(1) in dependence on a determination that the terrain type is firm sand.
vi. Select the second differential configuration DC(2) in dependence on a determination that the terrain type is soft sand.

The selection of one of the differential configurations DC(1), DC(2) is performed independently of the selected subsystem control mode 170(n). Thus, the differential configuration DC(n) can be changed in dependence on one or more of the terrain indicator parameters 165(n) without changing the subsystem control mode 170(n).

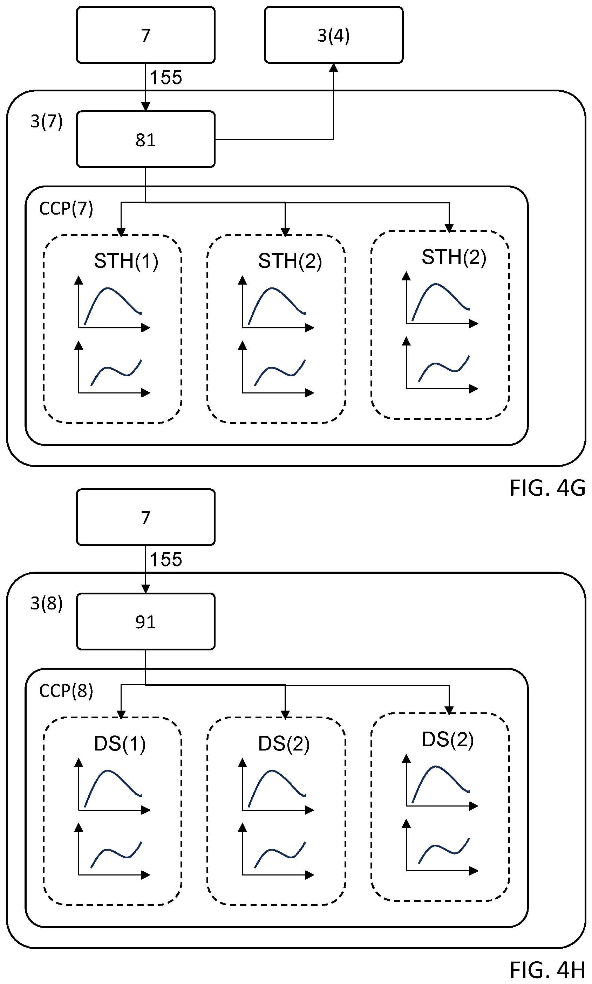

As shown schematically in Figure 4G, the traction control system 3(7) may be configured to control one or more of the vehicle subsystems 3(n) to maintain traction. The control system 1 is configured to control the traction control system 3(1) in dependence on one or more of the terrain indicator parameters 165(n). The traction control system 3(7) comprises a traction control unit 81. The traction control system 3(7) is configured to monitor the wheel speed of each of the wheels 9(1)-9(4) to detect a wheel slip event at one or more of the wheels 9(1)-9(4). The traction control system 3(7) may, for example, be configured to control the brake system 3(4) to control the application of a braking (retardation) force to one or more of the wheels 9(1)-9(4) in dependence on detection of the wheel slip event. The wheel slip event may be detected in dependence by comparing a variance in the measured wheel speeds to a wheel speed threshold. A wheel slip event is detected in dependence on a determination that the wheel speed variance is greater than the wheel speed threshold. The wheel slip threshold may be increased to reduce the sensitivity of the wheel slip detection Alternatively, the wheel slip threshold may be reduced to increase the sensitivity of the wheel slip detection. The traction control unit 81 defines one or more seventh configurable control parameter CCP(7) for controlling operation of the brake system 3(4). As described herein, the control system 1 is configured to modify the one or more seventh configurable control parameter CCP(7) in dependence on one or more of the terrain indicator parameters 165(n). The seventh configurable control parameter CCP(7) comprises a wheel slip threshold STH(n) for detecting a wheel slip event. A plurality of the wheel slip thresholds STH(n) are defined. The seventh configurable control parameter CCP(7) is modified by changing the selected wheel slip threshold STH(n).

The traction control unit 81 defines a first wheel slip threshold STH(1) and a second wheel slip threshold STH 2. The control system 1 is configured to control the traction control system 3(7) to select one of the first wheel slip threshold STH(1) and the second wheel slip threshold STH(2). The first, second and third wheel slip thresholds STH(1), STH(2), STH(3) are different from each other. The first wheel slip threshold STH(1) is a default amount of wheel slip. The second wheel slip threshold STH(2) is smaller than the first wheel slip threshold STH(1) and allows a smaller amount of wheel slip. The third wheel slip threshold STH(3) is larger than the first wheel slip threshold STH(1) and allows a larger amount of wheel slip. The wheel slip thresholds STH(1)-STH(3) are predefined. It will be understood that more than three wheel slip thresholds may be defined for selection by the control system 1.

The first wheel slip threshold STH(1) is the default setting and is suitable for use on surfaces having a high coefficient of friction, such as tarmac. The second wheel slip threshold STH(2) is defined to reduce wheel spin and is suitable for use on surfaces having a low coefficient of friction and/or rough surfaces, such as terrain comprising mud and/or ruts. The third wheel slip threshold STH(3) is defined to increase wheel spin and is suitable for use on surfaces having a high drag, such as deep snow and soft sand. The third wheel slip threshold STH(3) may also be suitable for deformed surfaces, such as offroad surfaces, gravel and ruts, to help avoid abrupt traction interventions. The control system 1 outputs the control signal 155 to request selection of one of the first and second wheel slip threshold STH(1), STH(2) in dependence on one or more of the terrain indicator parameters 165(n). The control signal 155 controls the traction control system 3(7) to select one of the first, second and third wheel slip thresholds STH(1)-STH(3). In dependence on a determination that the GGS control mode 170(2) is selected, the control system 1 is configured to modify the first configurable control parameter CCP(1) as follows:
i. Select the second wheel slip threshold STH(2) in dependence on a determination that the terrain type is grass terrain.
ii. Select the third wheel slip threshold STH(3) in dependence on a determination that the terrain type is gravel terrain.
iii. Select the second wheel slip threshold STH(2) in dependence on a determination that the terrain type is shallow snow terrain.
iv. Select the third wheel slip threshold STH(3) in dependence on a determination that the terrain type is deep snow terrain.
v. Select the third wheel slip threshold STH(3) in dependence on a determination that the terrain type is firm sand.
vi. Select the third wheel slip threshold STH(3) in dependence on a determination that the terrain type is soft sand.

The selection of one of the first and second wheel slip thresholds STH(1), STH(2) is performed independently of the selected subsystem control mode 170(n). Thus, the wheel slip thresholds STH(1), STH(2) can be changed in dependence on one or more of the terrain indicator parameters 165(n) without changing the subsystem control mode 170(n).

As shown schematically in Figure 4H, the ride system 3(8) comprises a ride control unit 91 and a plurality of dampers 93(1)-93(4). The dampers 93(1)-93(4) are provided to control the damping of the respective suspension units 63(1)-63(4). The control system 1 is configured to control the ride system 3(5) in dependence on one or more of the terrain indicator parameters 165(n). The dampers 93(1)-93(4) are associated with respective suspension units 63(1)-63(4). The dampers 93(1)-93(4) are adjustable. The control system 1 is configured to control the ride system 3(8) to adjust a firmness of the damping of the dampers 93(1)-93(4).

The suspension control unit 61 defines an eighth configurable control parameter CCP(8) for controlling operation of the dampers 93(1)-93(4). As described herein, the control system 1 is configured to modify the one or more eighth configurable control parameter CCP(8) in dependence on one or more of the terrain indicator parameters 165(n). The eighth configurable control parameter CCP(8) comprises a damper setting DS(n) for each of the dampers 93(1)-93(4). A plurality of the damper settings DS(n) are defined. The eighth configurable control parameter CCP(8) is modified by changing the selected damper setting DS(n). In the present embodiment, the damper control unit 91 defines a first damper setting DS(1), a second damper setting DS(2) and a third damper setting DS(3). The first damper setting DS(1) represents a default setting for the dampers 93(1)-93(4). The second damper setting DS(2) represents a soft setting for the dampers 93(1)-93(4). The third damper setting DS(3) represents a firm setting for the dampers 93(1)-93(4). The damper settings DS(n) are predefined. It will be understood that less than or more than three damper settings DS(n) may be defined for selection by the control system 1.

The control system 1 outputs the control signal 155 to request selection of one of first, second and third damper settings DS(1), DS(2), DS(3) in dependence on one or more of the terrain indicator parameters 165(n). The control signal 155 controls the ride system 3(8) to select one of the first, second and third damper settings DS(n). In dependence on a determination that the GGS control mode 170(2) is selected, the control system 1 is configured to modify the eighth configurable control parameter CCP(8) as follows:
i. Select the second damper setting DS(2) in dependence on a determination that the terrain type is grass terrain.
ii. Select the first damper setting DS(1) in dependence on a determination that the terrain type is gravel terrain.
iii. Select the first damper setting DS(1) in dependence on a determination that the terrain type is shallow snow terrain.
iv. Select the third damper setting DS(3) in dependence on a determination that the terrain type is deep snow terrain.
v. Select the first damper setting DS(1) in dependence on a determination that the terrain type is firm sand.
vi. Select the third damper setting DS(3) in dependence on a determination that the terrain type is soft sand.

The selection of one of the damper settings DS(n) is performed independently of the selected subsystem control mode 170(n). Thus, the damper setting DS(n) can be changed in dependence on one or more of the terrain indicator parameters 165(n) without changing the subsystem control mode 170(n).

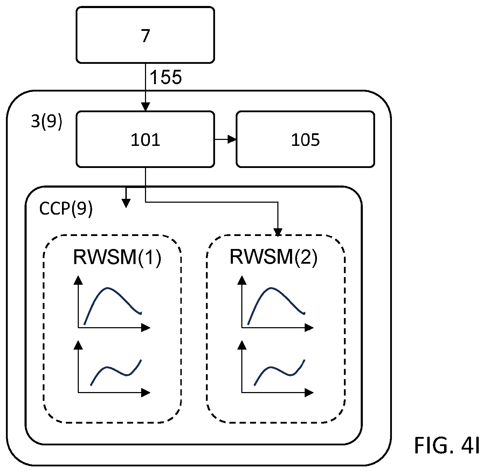

As shown schematically in Figure 4I, the rear wheel steering system 3(3) comprises a rear wheel steering control unit 101 or steering the rear wheels 9(3)-9(4). The rear wheel steering system 3(3) also comprises a rear steering actuator 105 to assist the steering of the vehicle 5. The rear wheel steering control unit 101 comprises one or more electronic processor. The rear wheel steering control unit 101 is configured to control operation of the rear steering actuator 105. The rear wheel steering control unit 101 defines the ninth configurable control parameter CCP(9) for controlling operation of the rear steering actuator 105. As described herein, the control system 1 is configured to modify the one or more ninth configurable control parameter CCP(9) in dependence on one or more of the terrain indicator parameters 165(n). The ninth configurable control parameter CCP(9) comprises a rear wheel steering map RWSM(n) for the rear steering actuator 105. A plurality of the rear wheel steering maps RWSM(n) are defined. The ninth configurable control parameter CCP(9) is modified by changing the selected rear wheel steering map RWSM(n). The or each rear wheel steering map RWSM(n) defines a relationship between a steering input (or a steering request) and a magnitude of the rear steering angle generated by the rear steering actuator 105. In the present embodiment, rear steering control unit 101 defines a first rear wheel steering map RWSM(1) and a second rear wheel steering map RWSM(2). The control system 1 is configured to control the rear wheel steering system 3(3) to select one of the first rear wheel steering map RWSM(1) and the second rear wheel steering map RWSM(2). The first rear wheel steering map RWSM(1) represents a default or normal rear wheel steering map for the steering assist actuator 45. The first rear wheel steering map RWSM(1) controls the rear steering actuator 105 to generate a rear wheel steering angle which is out-of-phase with a front wheel steering angle. In other words, the rear wheels 9(3), 9(4) steer in the opposite direction to the front wheels 9(1), 9(2). The second rear wheel steering map RWSM(2) controls the rear steering actuator 105 to generate the rear wheel steering angle which is in-phase with the front wheel steering angle. In other words, the rear wheels 9(3), 9(4) steer in the same direction to the front wheels 9(1), 9(2). The rear wheel steering maps RWSM(1)-RWSM(3) are predefined. It will be understood that more than two (2) rear wheel steering maps RWSM(n) may be defined for selection by the control system 1.

The first rear wheel steering map RWSM(1) implements rear-wheel steering which is out-of-phase with the front wheel steering. This is the default setting and is suitable for use when driving on-road. The second rear wheel steering map RWSM(1) implements rear-wheel steering which is in-phase with the front wheel steering. The in-phase steering inputs generate a lateral (crab-like) motion. This may be appropriate when making small steering wheel angle adjustments to reduce the risk of the vehicle into a dynamic condition, such as oversteer. The attributes may vary depending on the steering angle and/or the vehicle speed. The control system 1 outputs the control signal 155 to request selection of one of the first, second and third rear wheel steering map RWSM(1)-RWSM(3) in dependence on one or more of the terrain indicator parameters 165(n). The control signal 155 controls the rear wheel steering system 3(9) to select one of the first and second rear wheel steering maps RWSM(1), RWSM(2). In dependence on a determination that the GGS control mode 170(2) is selected, the control system 1 is configured to modify the ninth configurable control parameter CCP(9) as follows:
i. Select the second rear wheel steering map RWSM(2) in dependence on a determination that the terrain type is grass terrain.
ii. Select the first rear wheel steering map RWSM(1) in dependence on a determination that the terrain type is gravel terrain.
iii. Select the first rear wheel steering map RWSM(1) in dependence on a determination that the terrain type is shallow snow terrain.
iv. Select the second rear wheel steering map RWSM(2) in dependence on a determination that the terrain type is deep snow terrain.
v. Select the first rear wheel steering map RWSM(1) in dependence on a determination that the terrain type is firm sand.
vi. Select the second rear wheel steering map RWSM(2) in dependence on a determination that the terrain type is soft sand.

The selection of one of the first, second and third rear wheel steering maps RWSM(1)-RWSM(3) is performed independently of the selected subsystem control mode 170(n). Thus, the selected rear wheel steering map RWSM(n) can be changed in dependence on one or more of the terrain indicator parameters 165(n) without changing the subsystem control mode 170(n).

The control system 1 is configured to modify the configurable control parameters CCP(n) in dependence on a positive or negative determination that the terrain type is deep snow terrain. The control system 1 may determine that the terrain type is shallow snow terrain in dependence on a determination that the ambient temperature AMT is less than the temperature threshold TTH and that the rolling resistance Frr is less than the rolling resistance threshold RRT. Alternatively, or in addition, the control system 1 may determine that the terrain type is shallow snow terrain in dependence on a determination that the ambient temperature AMT is greater than the temperature threshold TTH and that the estimated surface friction (µ) is less than a first surface friction threshold SFT1. The first surface friction threshold SFT1 may be predefined. For example, the first surface friction threshold SFT1 may correspond to a coefficient of friction of 0.4. The control system 1 may modify one or more configurable control parameters CCP(n) in dependence on a determination that the terrain type is shallow snow terrain.

Alternatively, or in addition, the control system 1 may determine that the terrain type is gravel in dependence on a determination that the ambient temperature AMT is greater than the temperature threshold TTH; the estimated surface friction (µ) is greater than the first surface friction threshold SFT1 and less than a second surface friction threshold SFT2. The second surface friction threshold SFT2 may be predefined. For example, the second surface friction threshold SFT2 may correspond to a coefficient of friction of 0.8. The control system 1 may modify one or more configurable control parameters CCP(n) in dependence on a determination that the terrain type is gravel terrain.

Alternatively, or in addition, the control system 1 may determine that the terrain type is grass in dependence on a determination that each of the following conditions is satisfied: (i) the ambient temperature AMT is greater than the temperature threshold TTH; and (ii) the estimated surface friction (µ) is less than the first surface friction threshold SFT1. The control system 1 may modify one or more configurable control parameters CCP(n) in dependence on a determination that the terrain type is grass terrain.

Alternatively, or in addition, the control system 1 may determine that the terrain type is gravel in dependence on a determination that each of the following conditions is satisfied: (i) the ambient temperature AMT is greater than the temperature threshold TTH; and (ii) the estimated surface friction (µ) is greater than the first surface friction threshold SFT1 and less than the second surface friction SFT; and (iii) the surface roughness SRT is in a predetermined surface roughness range. The surface roughness range may be defined by a first (lower) surface roughness threshold SRT1 and/or a second (upper) surface roughness threshold SRT2. The lower surface roughness threshold valve SRT1 in the present embodiment is defined as 10%; and the upper surface roughness threshold SRT2 is defined as 35%. Other values may be used to define the surface roughness thresholds SRT1, SRT2. The control system 1 may modify one or more configurable control parameters CCP(n) in dependence on a determination that the terrain type is gravel terrain. The control system 1 may be configured to inhibit a determination that the terrain type is grass, snow or deep snow in dependence on a determination that the surface roughness is greater than the first surface roughness threshold SRT1.

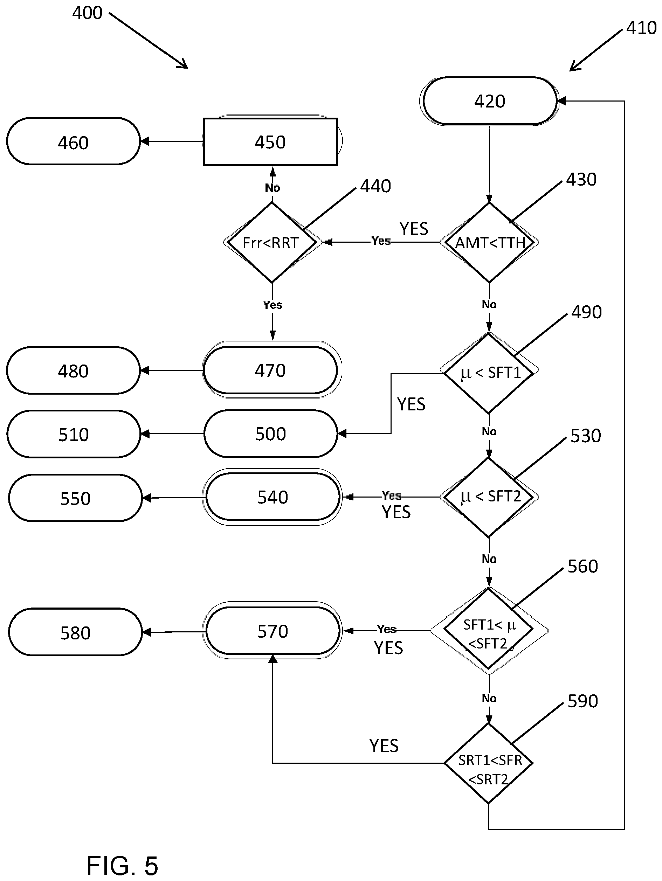

The method 400 for controlling operation of the at least one vehicle subsystem 3(n) will now be described with reference to a block diagram 410 shown in Figure 5. The GGS control mode 170(2) is selected (BLOCK 420). The selection of the GGS control mode 170(2) is made in dependence on one or more terrain indicator parameter and one or more atmospheric indicator parameter 185(n). The one or more atmospheric indicator parameter 185(n) comprises the ambient temperature AMT. The ambient temperature AMT is compared to the temperature threshold TTH. A check is performed to determine if the ambient temperature AMT is less than the temperature threshold TTH (BLOCK 430). The temperature threshold TTH1 is defined as -5°C in the present embodiment. If the ambient temperature AMT is less than the temperature threshold TTH, the rolling resistance Frr is compared to the rolling resistance threshold RRT. The rolling resistance threshold RRT is defined as 2000N in the present embodiment. Other values may be assigned for the rolling resistance threshold RRT. The rolling resistance threshold RRT may be greater than or less than 2000N. A check is performed to determine if the rolling resistance Frr is less than the rolling resistance threshold RRT (BLOCK 440). A determination is made that the vehicle 5 is operating on deep snow terrain in dependence on a determination that the rolling resistance Frr is greater than the rolling resistance threshold RRT (BLOCK 450). The one or more first configurable control parameter CCP(1) is defined in dependence on the determination that the vehicle 5 is operating on deep snow terrain. The method 400 comprises modifying the one or more configurable control parameters CCP(n) in dependence on the determination that the terrain type is deep snow terrain (BLOCK 460).

As outlined above, the rolling resistance Frr is compared to the rolling resistance threshold RRT (BLOCK 440). A determination is made that the vehicle 5 is operating on shallow snow terrain in dependence on a determination that the rolling resistance Frr is less than the rolling resistance threshold RRT (BLOCK 470). The method 400 comprises modifying the one or more configurable control parameters CCP(n) in dependence on a determination that the terrain type is shallow snow terrain (BLOCK 480).

If the ambient temperature AMT is greater than the temperature threshold TTH (BLOCK 430), the estimated surface friction (µ) is compared to the first surface friction threshold SFT1. A check is performed to determine if the estimated surface friction (µ) is less than the first surface friction threshold SFT1, i.e., µ<SFT1 (BLOCK 490). The first surface friction threshold SFT1 is defined as 0.4 in the present embodiment. The first surface friction threshold SFT1 may be less than or greater than 0.4. A determination is made that the vehicle is operating on wet grass in dependence on a determination that the estimated surface friction (µ) is less than the first surface friction threshold SFT1 (BLOCK 500). The method 400 comprises modifying the one or more configurable control parameters CCP(n) in dependence on a determination that the terrain type is wet grass terrain (BLOCK 510). If the ambient temperature AMT decreases below the temperature threshold TTH (BLOCK 430), a determination may be made that the terrain has changed from wet grass terrain (BLOCK 500) to shallow snow terrain (BLOCK 470).

If the estimated surface friction (µ) is greater than the first surface friction threshold SFT1 (BLOCK 490), the estimated surface friction (µ) is compared to the second surface friction threshold SFT2. A check is performed to determine if the estimated surface friction (µ) is less than the second surface friction threshold SFT2, i.e., SFT1<µ<SFT2 (BLOCK 560). A determination is made that the vehicle 5 is operating on gravel terrain in dependence on a determination that the estimated surface friction (µ) is less than the second surface friction threshold SFT2, i.e., SFT1<µ<SFT2 (BLOCK 570). The second surface friction threshold SFT2 is defined as 0.8 in the present embodiment. The second surface friction threshold SFT2 may be less than or greater than 0.8. The method 400 comprises modifying the one or more configurable control parameters CCP(n) in dependence on a determination that the terrain type is gravel terrain (BLOCK 580).

If the estimated surface friction (µ) is greater than the second surface friction threshold SFT2 (BLOCK 560), the surface roughness SFR (%) is compared to the surface roughness SFR threshold(s). A check is performed to determine if the surface roughness SFR (%) is within the surface roughness range (BLOCK 590). A determination is made that the vehicle is operating on gravel terrain (BLOCK 570) in dependence on a determination that the road roughness (%) is within the surface roughness range. The one or more first configurable control parameter CCP(1) is defined in dependence on the determination that the vehicle 5 is operating on gravel terrain. The method 400 comprises modifying the one or more configurable control parameters CCP(n) in dependence on a determination that the terrain type is gravel terrain (BLOCK 580).

If the surface roughness SFR (%) is outside the surface roughness range (BLOCK 560), a different subsystem control mode 170(n) may be selected. For example, the general driving control mode 170(1) may be selected. The process continues while the vehicle 5 is operating.

Table B below illustrates the configuration of the vehicle subsystems 3(n) in the GGS control mode 170(2) depending on whether the terrain type is determined to comprise or consist of shallow snow or deep snow. Shallow snow may be characterised as snow having a depth less than a predetermined depth threshold, whereas deep snow has a depth greater than the predetermined depth threshold. The table indicates the selected configurable control parameter CCP(n) for each of the vehicle systems 3(n). The configurable control parameter CCP(n) is defined in dependence on the one or more terrain indicator parameter 165(n). As described herein, the one or more terrain indicator parameter 165(n) are used within the GGS control mode 170(2) to differentiate between shallow snow terrain and deep snow terrain. The configurable control parameter CCP(n) are modified depending on whether the terrain type is determined to comprise or consist of shallow snow or deep snow. The configurable control parameters CCP(n) are summarised in TABLE B for each of the terrain types in the GGS control mode 170(2).

**TABLE B**

| **GGS Control Mode 170(2)** | **Grass** | **Gravel** | **Snow** | |
|---|---|---|---|---|
| | | | Shallow Snow | Deep Snow |
| Propulsion System 3(1) | TC(3) | TC(1) | TC(3) | TC(1) |
| Transmission System 3(2) | GM(2) | GM(1) | GM(2) | GM(3) |
| Front Wheel Steering System 3(3) | FWSM(2) | FWSM(1) | FWSM(2) | FWSM(3) |
| Brake System 3(4) | BM(2) | BM(1) | BM(2) | BM(2) |
| Suspension System 3(5) | SC(1) | SC(1) | SC(1) | SC(3) |
| Differential System 3(6) | DC(2) | DC(2) | DC(1) | DC(3) |
| Traction Control System 3(7) | STH(2) | STH(3) | STH(2) | STH(3) |
| Ride System 3(8) | DS(2) | DS(1) | DS(1) | DS(3) |
| Rear Wheel Steering System 3(9) | RWSM(2) | RWSM(1) | RWSM(1) | RWSM(2) |

The control system 1 and the method 400 according to the above embodiment have been described with particular reference to the GSS control mode 170(2). It will be understood that the control system 1 and the method 400 described herein may be used to re-configure the vehicle subsystems 3(n) when one of the other control modes 170(n) is selected. For example, the control system 1 and the method 400 may be used to re-configure the vehicle subsystems 3(n) when the sand control mode 170(4) is selected, for example in dependence on a firmness of the sand terrain. A rolling resistance threshold may be defined to differentiate between a sand terrain having a soft composition and a sand terrain having a firm composition. One or more of the configurable control parameters CCP(n) described herein may be modified in dependence on the determination. The control system 1 and the method 400 will now be described with respect to the sand control mode 170(4).

Table C below illustrates the configuration of the vehicle subsystems 3(n) in the Sand control mode 170(4) depending on whether the terrain type is determined to comprise or consist of firm sand or soft sand. Firm sand may be characterised as compacted sand or relatively shallow sand. In contrast, soft sand may, for example, be characterised as relatively deep sand, for example in a sand dune. The table indicates the selected configurable control parameter CCP(n) for each of the vehicle systems 3(n). The configurable control parameter CCP(n) is defined in dependence on the one or more terrain indicator parameter 165(n). The configurable control parameter CCP(n) may optionally be defined in dependence on the one or more atmospheric indicator parameter 185(n). The one or more terrain indicator parameter 165(n) is used within the Sand control mode 170(4) to differentiate between firm sand and soft sand. As outlined below, the configurable control parameter CCP(n) are modified depending on whether the terrain type is determined to comprise or consist of firm sand or soft sand. The configurable control parameters CCP(n) are summarised in TABLE C for each of these terrain type within the Sand control mode 170(4).

**TABLE C**

| Sand Control Mode 170(4) | Sand | |
|---|---|---|
| | Firm Sand | Soft Sand |
| Propulsion System 3(1) | TC(1) | TC(2) |
| Transmission System 3(2) | GM(1) | GM(3) |
| Front wheel steering system 3(3) | FWSM(1) | FWSM(3) |
| Brake System 3(4) | BM(1) | BM(2) |
| Suspension System 3(5) | SC(1) | SC(1) |
| Differential System 3(6) | DC(1) | DC(2) |
| Traction Control System 3(7) | STH(3) | STH(3) |

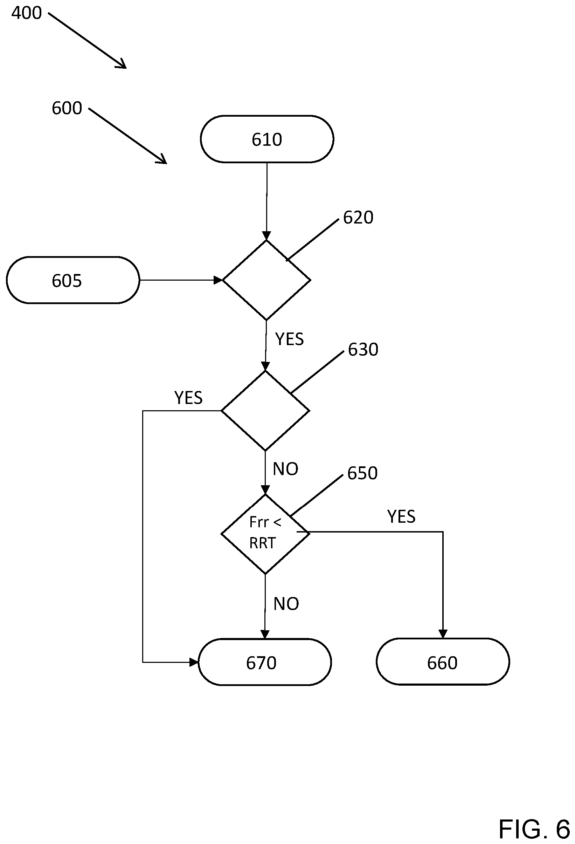

The method 400 comprises differentiating between soft sand and firm mode when operating in the Sand control mode 170(4). The method 400 for controlling the at least one vehicle subsystem 3(n) in the Sand control mode 170(4) will now be described. A block diagram 600 is shown in Figure 6 representing the control process. The Sand control mode 170(2) is selected (BLOCK 6100). The tire pressure monitoring sensors 13(11) output tire pressure signals 15(11) indicating the measured tire pressure of each wheel 9(1)-9(4). When operating on sand, the tire pressures may be decreased (either manually or automatically) to provide improved traction. The method comprises comparing the measured tire pressures to a predefined tire pressure threshold TPT. If the measure tire pressure for each of the wheels 9(1)-9(4) is less than the predefined tire pressure threshold TPT, the method 400 comprises determining that the vehicle 5 is in an operating state suitable for operation on sand terrain (BLOCK 620). The method comprises determining if the vehicle 5 has been pre-configured for operation on sand terrain (BLOCK 630). The vehicle 5 may, for example, be pre-configured for operation on sand terrain by manually selecting a dedicated control mode. The Sand control mode 170(4) is configured for operation on soft sand (BLOCK 640) in dependence on a positive determination that the vehicle 5 has been pre-configured for operation on sand terrain (BLOCK 630). If the vehicle has not been pre-configured for operation on sand terrain, the rolling resistance Frr is compared to a rolling resistance threshold value RRT (BLOCK 650). The rolling resistance threshold value RRT is predefined. The rolling resistance threshold value RRT is defined as 2000N in the present embodiment. The rolling resistance threshold value RRT may be less than or greater than 2000N. If the rolling resistance Frr is less than the rolling resistance threshold value RRT, a determination is made that the terrain type is in the form of firm sand (BLOCK 660). The method 400 comprises modifying the one or more configurable control parameters CCP(n) in dependence on a determination that the terrain type is firm sand terrain. If the rolling resistance Frr is greater than the rolling resistance threshold value RRT, a determination is made that the terrain type is in the form of soft sand (BLOCK 670). The method 400 comprises modifying the one or more configurable control parameters CCP(n) in dependence on a determination that the terrain type is soft sand (BLOCK 480).

The control system 1 and the method 400 according to the above embodiment apply one or more Boolean operator to the or each terrain indicator parameter 165(n) to select a subsidiary subsystem control mode 175(n). The configurable control parameter(s) CCP(n) are defined in dependence on the determined subsidiary subsystem control mode 175(n) to control the vehicle subsystems 3(n). In a variant, the subsidiary subsystem control mode 175(n) may be determined in dependence on a subsidiary subsystem control mode probability 180(n). The variant is illustrated in Figure 6. The subsidiary subsystem control mode probability 180(n) provides an indication of a suitability of each of the subsidiary subsystem control modes 175(n). The subsidiary subsystem control mode probability 180(n) may be determined using the same technique described herein for selecting one of the vehicle subsystem control modes 170(n). The subsidiary subsystem control mode probability 180(n) is calculated for each of the subsidiary subsystem control modes 175(n). The subsidiary subsystem control mode probability 180(n) are compared with each other to determine which one of the plurality of subsidiary subsystem control modes 175(n) is appropriate for the current operating conditions. The vehicle control unit 7 may integrate the mode selection probability 180(n) of each of the subsidiary subsystem control modes 175(n). The integration may determine a positive difference between the calculated mode selection probability 180(n) of the current selected subsidiary subsystem control mode 175(n) and the calculated mode selection probability 180(n) of each of the other subsidiary subsystem control modes 170(n). The vehicle control unit 7 may change the selected subsidiary subsystem control mode 170(n) when the integration value exceeds a predetermined threshold, or the current subsystem control mode selection probability 180(n) is equal to zero or below a subsidiary subsystem control mode probability threshold. Since the subsidiary subsystem control mode 175(n) are a subset of the vehicle subsystem control modes 170(n), the threshold(s) for changing the selected subsidiary subsystem control mode 175(n) may be less than those applied for selecting one of the subsystem control modes 170(n).

It will be appreciated that various changes and modifications may be made to the control system 1 and the method 400 described herein without departing from the present invention.

## Claims

1. A control system for controlling at least one vehicle subsystem to control dynamic operation of a vehicle, the control system being configured to select one of a plurality of subsystem control modes in dependence on a determined terrain type on which the vehicle is operating, each of the plurality of subsystem control modes) defining one or more configurable control parameter for controlling operation of the at least one vehicle subsystem; the control system comprising one or more processor collectively configured to:
receive at least one input signal comprising at least one terrain indicator parameter providing an indication of the terrain type on which the vehicle is operating;
determine the terrain type on which the vehicle is operating in dependence on the at least one terrain indicator parameter; and
select one of the plurality of subsystem control modes in dependence on the determined terrain type, the selected one of the plurality of subsystem control modes defining the one or more control parameter for the at least one vehicle subsystem for operation on the determined terrain type;
wherein the one or more processor is collectively configured to configure the one or more configurable control parameter in the selected one of the plurality of subsystem control modes in dependence on the at least one terrain indicator parameter.

2. A control system as claimed in claim 1, wherein the at least one terrain indicator parameter comprises at least one variable representing a characteristic of the terrain type on which the vehicle is operating; the one or more processor being collectively configured to compare the variable to a predefined threshold and to modify the one or more configurable control parameter in dependence on a determination that the variable is greater than or less than the predefined threshold.

3. A control system as claimed in claim 2, wherein the at least one variable comprises a rolling resistance estimate and the predefined threshold is a rolling resistance threshold, the one or more configurable control parameter being modified in dependence on a determination that the rolling resistance estimate is greater than or less than the predefined rolling resistance threshold.

4. A control system as claimed in claim 2 or claim 3, wherein the at least one variable comprises a surface friction estimate and the predefined threshold is a surface friction threshold, the one or more configurable control parameter being modified in dependence on a determination that the surface friction estimate is greater than or less than the predefined surface friction threshold.

5. A control system as claimed in any one of claims 2, 3 or 4, wherein the at least one variable comprises a surface roughness estimate and the predefined threshold is a surface roughness threshold, the one or more configurable control parameter being modified in dependence on a determination that the surface roughness estimate is greater than or less than the predefined surface roughness threshold.

6. A control system as claimed in any one of the preceding claims, wherein at least one of the plurality of subsystem control modes comprises a plurality of subsidiary subsystem control modes, each of the plurality of subsidiary subsystem control modes defining one or more modified control parameter for controlling operation of the at least one vehicle subsystem; wherein configuring the one or more configurable control parameter comprises selecting a different one of the plurality of subsidiary subsystem control modes.

7. A control system as claimed in claim 6, wherein the one or more processor is collectively configured to
determine a plurality of subsidiary subsystem control mode probabilities in dependence on the at least one terrain indicator parameter, the subsidiary subsystem control mode probabilities providing an indication of a suitability of each of the subsidiary subsystem control modes,
selecting one of the plurality of subsidiary subsystem control modes in dependence on a determination that the subsidiary subsystem control mode probability for that subsidiary subsystem control mode is greater than a subsidiary subsystem control mode probability threshold.

8. A control system as claimed in any one of the preceding claims, wherein the one or more processor is collectively configured to:
determine a subsystem control mode probability for each of the plurality of terrain indicator parameters in dependence on the at least one terrain indicator parameter, the subsystem control mode probabilities providing an indication of a suitability of each of the subsystem control modes,
selecting one of the plurality of subsystem control modes in dependence on a determination that the subsystem control mode probability is greater than a subsystem control mode probability threshold.

9. A control system as claimed in claims 7 and 8, wherein the subsidiary subsystem control mode probability threshold is less than the subsystem control mode probability threshold.

10. A control system as claimed in any one of the preceding claims, wherein the one or more configurable control parameter comprise one or more of the following:
a first configurable control parameter comprising one or more torque curve for controlling operation of a propulsion system;
a second configurable control parameter comprising one or more gear shift map for controlling selection of a drive ratio of a transmission system;
a third configurable control parameter comprising one or more front wheel steering map for controlling a front wheel steering system;
a fourth configurable control parameter comprising one or more braking map for controlling a brake system;
a fifth configurable control parameter comprising one or more suspension height setting for controlling a suspension system;
a sixth configurable control parameter comprising one or more differential configuration for controlling a differential system;
a seventh configurable control parameter comprising one or more wheel slip threshold for controlling a traction control system;
an eighth configurable control parameter comprising one or more damper setting for controlling a ride system; and
a ninth configurable control parameter comprising one or more rear wheel steering map for controlling a rear wheel steering system

11. A vehicle comprising a control system as claimed in any one of the preceding claims.

12. A method of controlling at least one vehicle subsystem to control dynamic operation of a vehicle, the method comprising:
determining a terrain type on which the vehicle is operating in dependence on at least one terrain indicator parameter;
selecting one of a plurality of subsystem control modes in dependence on a determined terrain type on which the vehicle is operating, the selected one of the plurality of subsystem control modes defining the one or more control parameter for the at least one vehicle subsystem for operation on the determined terrain type;
wherein each of the plurality of subsystem control modes define one or more configurable control parameter for controlling operation of the at least one vehicle subsystem; the method comprising configuring the one or more configurable control parameter in the selected one of the plurality of subsystem control modes in dependence on the at least one terrain indicator parameter.
